# EUROPEAN PATENT APPLICATION

(11) **EP 3 503 550 A1**
(43) Date of publication of application: **26.06.2019**
(21) Application number: 16918465.2
(22) Date of filing: 10.10.2016
(51) Int. Cl.: H04N 19/186, H04N 19/119, H04N 21/234, H04N 19/176, H04N 19/44, H04N 19/70

(54) **METHOD AND DEVICE FOR ENCODING OR DECODING LUMA BLOCK AND CHROMA BLOCK**

(71) Applicant: Samsung Electronics Co., Ltd., Suwon-si, Gyeonggi-do 16677 (KR)
(72) Inventor: JIN, Bo-ra, Suwon-si Gyeonggi-do 16677 (KR); PARK, Min-woo, Suwon-si Gyeonggi-do 16677 (KR); KIM, Chan-yul, Suwon-si Gyeonggi-do 16677 (KR); MIN, Jung-hye, Suwon-si Gyeonggi-do 16677 (KR)
(74) Representative: Appleyard Lees IP LLP
(86) International application number: PCT/KR2016/011301
(87) International publication number: WO 2018/070554

(57) **Abstract**

Provided are a method and device for encoding or decoding a luma block and a chroma block. An image decoding method and device according to an embodiment include an image decoding method including obtaining, from a bitstream, partitioning information for a luma block; partitioning a current luma block in at least one direction, thus partitioning the current luma block into at least two luma blocks, when the partitioning information indicates that the current luma block is to be partitioned to a next level, and obtaining, from the bitstream, merge information about a current chroma block corresponding to the current luma block; performing decoding on the current luma block when the partitioning information indicates that the current luma block is not to be partitioned; partitioning the current chroma block into at least two chroma blocks corresponding to the at least two luma blocks when the partitioning information indicates that the current luma block is to be partitioned to the next level; and performing decoding on the current chroma block when the partitioning information indicates that the current luma block is not to be partitioned or the merge information indicates that the partitioning of the current chroma block is to be discontinued.

## Description

### TECHNICAL FIELD

The present specification is related to image encoding and image decoding methods and devices, and more particularly, to a method and device for encoding or decoding a luma block and a chroma block.

### BACKGROUND ART

Image data is encoded according to a predetermined data compression standard, for example, a codec according to the Moving Picture Expert Group (MPEG) standard, and then is recorded in a recording medium or transferred via a communication channel in the form of a bitstream.

As hardware for reproducing and storing high resolution or high quality image content is being developed and supplied, a need for a codec for effectively encoding or decoding the high resolution or high quality image content is increasing. Image content that is encoded may be decoded to be reproduced. Recently, methods of effectively compressing the high resolution or high quality image content have been performed. For example, a method of efficiently compressing an image by processing the image to be encoded in an arbitrary manner is used.

In order to compress an image, various data units may be used, and a hierarchical relationship may exist among the data units. A data unit may be partitioned by using various methods so as to determine a size of the data unit used in the image compression, and when an optimized data unit according to image characteristics is determined, image encoding or decoding may be performed.

### DESCRIPTION OF EMBODIMENTS

### TECHNICAL PROBLEM

To solve technical problems, a method and device for encoding or decoding a luma block and a chroma block are provided.

### SOLUTION TO PROBLEM

According to an embodiment, an image decoding method includes obtaining, from a bitstream, partitioning information for a luma block; partitioning a current luma block in at least one direction, thus partitioning the current luma block into at least two luma blocks, when the partitioning information indicates that the current luma block is to be partitioned to a next level, and obtaining, from the bitstream, merge information about a current chroma block corresponding to the current luma block; performing decoding on the current luma block when the partitioning information indicates that the current luma block is not to be partitioned; partitioning the current chroma block into at least two chroma blocks corresponding to the at least two luma blocks when the partitioning information indicates that the current luma block is to be partitioned to the next level; and performing decoding on the current chroma block when the partitioning information indicates that the current luma block is not to be partitioned or the merge information indicates that the partitioning of the current chroma block is to be discontinued.

In the image decoding method according to an embodiment, when the partitioning information indicates that the current luma block is not to be partitioned, the merge information may not be obtained.

In the image decoding method according to an embodiment, a number of luma blocks partitioned from the current luma block may be equal to or greater than a number of chroma blocks partitioned from the current chroma block.

In the image decoding method according to an embodiment, the partitioning of the current chroma block into the at least two chroma blocks may include determining whether to partition the current chroma block into the at least two chroma blocks, based on at least one of a size and a gradient of a largest coding unit including the current chroma block.

In the image decoding method according to an embodiment, when the next level is greater than a predetermined level, the current chroma block may be partitioned according to a same partition shape as the current luma block.

In the image decoding method according to an embodiment, when the next level is less than a predetermined level, the current chroma block may be partitioned according to a same partition shape as the current luma block.

In the image decoding method according to an embodiment, when a size of the current chroma block is greater than a predetermined size, the current chroma block may be partitioned according to a same partition shape as the current luma block.

In the image decoding method according to an embodiment, when a size of the current chroma block is less than a predetermined size, the current chroma block may be partitioned according to a same partition shape as the current luma block.

In the image decoding method according to an embodiment, when a shape of the current chroma bock is at least one of a square shape or a non-square shape, the current chroma block may be partitioned according to a partition shape equal to a partition shape of the current luma block.

In the image decoding method according to an embodiment, the current luma block may be a current luma coding unit, and the current chroma block may be a current chroma coding unit.

According to an embodiment, an image encoding method includes determining whether to partition a current luma block in at least one direction, thus partitioning the current luma block into at least two luma blocks at a next level; performing encoding on the current luma block when the current luma block is not to be partitioned; determining whether to partition a current chroma block corresponding to the current luma block into at least two chroma blocks corresponding to the at least two luma blocks when the current luma block is to be partitioned; performing encoding on the current chroma block when the current luma block is not to be partitioned or the current chroma block is not to be partitioned; and encoding and transmitting partitioning information indicating whether the current luma block is to be partitioned and merge information indicating whether the current chroma block is to be partitioned.

According to an embodiment, an image decoding device includes a receiver configured to obtain, from a bitstream, partitioning information for a luma block and merge information about a current chroma block corresponding to a current luma block; a block determiner configured to partition a current luma block in at least one direction, thus partitioning the current luma block into at least two luma blocks, when the partitioning information indicates that the current luma block is to be partitioned to a next level, and partition the current chroma block into at least two chroma blocks corresponding to the at least two luma blocks; and a decoder configured to perform decoding on the current luma block when the partitioning information indicates that the current luma block is not to be partitioned, and perform decoding on the current chroma block when the partitioning information indicates that the current luma block is not to be partitioned or the merge information indicates that the partitioning of the current chroma block is to be discontinued.

### BRIEF DESCRIPTION OF DRAWINGS

FIG. 1 illustrates a block diagram of an image encoding device 100 according to an embodiment.
FIG. 2 illustrates a block diagram of an image decoding device 200 according to an embodiment.
FIG. 3 illustrates a luma block 310 and a chroma block 320 according to an embodiment.
FIG. 4 illustrates a process of determining a partition of a chroma block 400 according to an embodiment.
FIG. 5 illustrates a partition of a luma block 510 and a partition of a chroma block 520 according to an embodiment.
FIG. 6 illustrates a partitioning tree structure of a luma block and a partitioning tree structure of a chroma block according to an embodiment.
FIG. 7 illustrates syntax 700 indicating merge information about a chroma block according to an embodiment.
FIG. 8 illustrates a flowchart for describing an image encoding method according to an embodiment
FIG. 9 illustrates a flowchart for describing an image decoding method according to an embodiment.
FIG. 10 illustrates an operation of determining one or more coding units by partitioning a current coding unit, according to an embodiment.
FIG. 11 illustrates an operation of determining one or more coding units by partitioning a non-square coding unit, according to an embodiment.
FIG. 12 illustrates an operation of partitioning a coding unit, based on at least one of block shape information and partition shape information, according to an embodiment.
FIG. 13 illustrates a method of determining a predetermined coding unit from among an odd number of coding units, according to an embodiment.
FIG. 14 illustrates a processing order of a plurality of coding units when the plurality of coding units are determined by partitioning a current coding unit, according to an embodiment.
FIG. 15 illustrates an operation of determining that a current coding unit is partitioned into an odd number of coding units, when the coding units are not processable in a predetermined order, according to an embodiment.
FIG. 16 illustrates an operation of determining one or more coding units by partitioning a first coding unit, according to an embodiment.
FIG. 17 illustrates that partitioning methods of determining non-square second coding units by partitioning a first coding unit are restricted when the second coding units satisfy a predetermined condition, according to an embodiment.
FIG. 18 illustrates an operation of partitioning a square coding unit when partition shape information does not indicate whether to partition the square coding unit into four square coding units, according to an embodiment.
FIG. 19 illustrates that a processing order of a plurality of coding units is variable depending on an operation of partitioning a coding unit, according to an embodiment.
FIG. 20 illustrates an operation of determining a depth of a coding unit as the shape and size of the coding unit vary when a plurality of coding units are determined by recursively partitioning the coding unit, according to an embodiment.
FIG. 21 illustrates depths determinable based on the shapes and sizes of coding units, and part indices (PIDs) for distinguishing the coding units, according to an embodiment.
FIG. 22 illustrates that a plurality of coding units are determined based on a plurality of predetermined data units included in a picture, according to an embodiment.
FIG. 23 illustrates a processing block serving as a unit for determining a determination order of reference coding units included in a picture, according to an embodiment.

### MODE OF DISCLOSURE

Advantages and features of the disclosed embodiments and methods of accomplishing the same may be understood more readily by reference to the following detailed descriptions of embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those of ordinary skill in the art.

Terms that are used in the specification will be briefly described, and the disclosed embodiments will be described in detail.

All terms used in the present specification are general terms that are selected in consideration of their functions in the disclosure and are currently widely used. However, the terms may have different meanings according to an intention of one of ordinary skill in the art, precedent cases, or the appearance of new technologies. Also, some terms may be arbitrarily selected by the applicant, and in this case, the meaning of the selected terms will be described in detail in the detailed descriptions of the disclosure. Thus, the terms used herein have to be defined based on the meaning of the terms together with the description throughout the specification.

In the present specification, a singular form may include plural forms, unless there is a particular description contrary thereto.

Throughout the specification, when a part "includes" or "comprises" an element, unless there is a particular description contrary thereto, the part may further include other elements, not excluding the other elements. The term 'unit', as used in the specification, means, but is not limited to, a software or hardware component, such as a Field Programmable Gate Array (FPGA) or Application Specific Integrated Circuit (ASIC), which performs certain tasks. A "unit" may advantageously be configured to reside on the addressable storage medium and configured to execute on one or more processors. Thus, a "unit" may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and "units" may be combined into fewer components and "units" or further separated into additional components and "units".

Hereinafter, an "image" may indicate a static image such as a still image of a video or may indicate a dynamic image such as a moving picture that is the video itself.

Hereinafter, a "sample" may refer to data that is allocated to a sampling location of an image and is a processing target. For example, pixel values in an image of a spatial domain and transform coefficients of a transform domain may be samples. A unit including at least one of the samples may be defined as a block.

Hereinafter, the present disclosure will now be described more fully with reference to the accompanying drawings for one of ordinary skill in the art to be able to perform the embodiments without any difficulty. In addition, portions irrelevant to the description of the present disclosure will be omitted in the drawings for a clear description of the present disclosure.

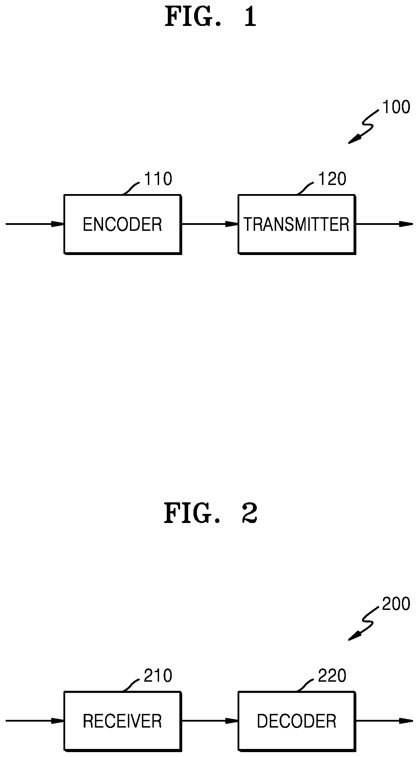

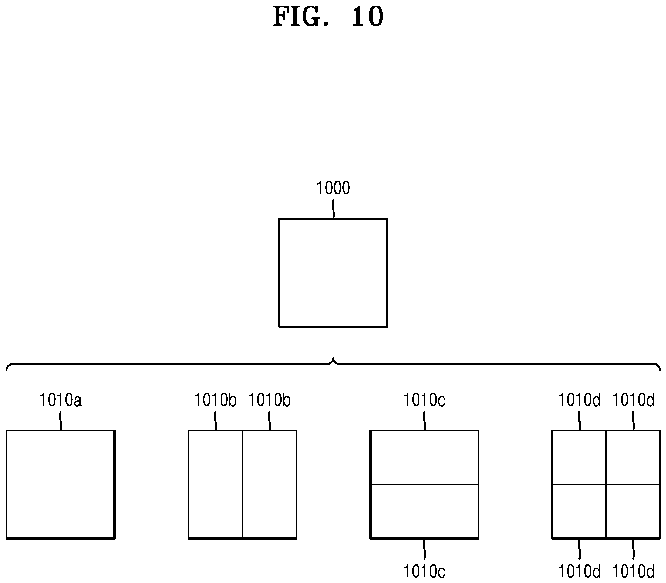

Hereinafter, with reference to FIGS. 1 to 23, an image encoding device and an image decoding device, and an image encoding method and an image decoding method according to embodiments will now be described in detail. With reference to FIGS. 1 to 9, a method and device for encoding or decoding a luma block and a chroma block according to embodiments will be described, and with reference to FIGS. 10 to 23, a method of determining a data unit of an image according to embodiments will be described.

Hereinafter, with reference to FIGS. 1 to 9, a method and device for encoding or decoding a luma block and a chroma block according to embodiments will now be described.

FIG. 1 illustrates a block diagram of an image encoding device 100 according to an embodiment. The image encoding device 100 according to an embodiment includes an encoder 110 and a transmitter 120.

According to an embodiment, the encoder 110 may partition image data of a current picture into largest coding units, according to a maximum size of a coding unit. Each of the largest coding units may include coding units that are partitioned according to block shapes and partition shapes. In a largest coding unit according to an embodiment, image data of a spatial domain included in the largest coding unit may be hierarchically classified according to block shapes and partition shapes. A block shape of a coding unit may be a square shape or a rectangular shape, or may be a random geometric shape but is not limited to a data unit having a constant size.

When a size of a picture to be encoded is increased, an image may be encoded at a higher image compression rate by being encoded based on a larger unit. However, when the coding unit becomes large and a size thereof is fixed, it is not possible to efficiently encode the image by reflecting a characteristic of the image being constantly changed.

For example, when a flat area about sea or sky is encoded, a compression rate may be increased when a coding unit becomes large, but, when a complicated area about people or a building is encoded, the compression rate may be increased when a coding unit becomes small.

To do so, the encoder 110 according to an embodiment may set largest coding units having different sizes according to respective pictures or slices, and may set a block shape and a partition shape of one or more coding units partitioned from a largest coding unit. According to the block shape and the partition shape, a size of a coding unit included in the largest coding unit may be variously set.

The block shape and the partition shape of one or more coding units may be determined based on rate-distortion (R-D) cost calculation. The block shape and the partition shape may be differently determined according to each picture or each slice, or may be differently determined according to each largest coding unit. The determined block shape and split shape may be used in encoding of image data of each coding unit.

The encoder 110 of the image encoding device 100 according to an embodiment may determine a shape of a coding unit. For example, whether a coding unit has a square shape or a non-square shape may be determined, and information indicating a shape of the coding unit may be included in block shape information.

The encoder 110 according to an embodiment may determine to which shape the coding unit is to be partitioned. The encoder 110 may determine a shape of at least one coding unit included in a coding unit, and the transmitter 120 may generate a bitstream including partition shape information including information about the shape of the coding unit.

According to an embodiment, the encoder 110 may determine whether a coding unit is to be partitioned or is not to be partitioned. When the encoder 110 determines that only one coding unit is included in a coding unit or the coding unit is not partitioned, the transmitter 120 may generate a bitstream including partition shape information indicating that the coding unit is not partitioned. Also, the encoder 110 may partition a coding unit into a plurality of coding units, and the transmitter 120 may generate a bitstream including partition shape information indicating that the coding unit is partitioned into the plurality of coding units.

According to an embodiment, information indicating how many coding units are to be partitioned from the coding unit or indicating in which direction the coding unit is to be partitioned may be included in the partition shape information. For example, the partition shape information may indicate partitioning in at least one of a vertical direction and a horizontal direction or may indicate non-partitioning.

A method of determining a coding unit according to a block shape and a partition shape will be described in detail with reference to FIGS. 10 to 23.

The encoder 110 according to an embodiment may perform partitioning of a coding unit on each of a luma component and a chroma component. In the present specification, a 'luma block' may indicate a coding unit of a luma component, and a 'chroma block' may indicate a coding unit of a chroma component.

According to an embodiment, the encoder 110 may independently perform partitioning of the luma block and partitioning of the chroma block, and may perform partitioning of the chroma block, based on partitioning of the luma block. According to an embodiment, when partitioning of the chroma block is performed based on partitioning of the luma block, the encoder 110 may partition a current chroma block according to a partitioning shape of a luma block corresponding to the current chroma block. Based on a fact that human eyes are generally more sensitive to brightness information rather than color information, a size of a chroma block may be set to be equal to or larger than a size of a luma block. That is, the number of partitions partitioned from the chroma block may be equal to or less than the number of partitions partitioned from the luma block corresponding thereto. Thus, the encoder 110 may discontinue partitioning of the current chroma block, instead of not partitioning the current chroma block according to a partitioning shape of the luma block corresponding to the current chroma block. Also, the encoder 110 may encode information indicating discontinuation of partitioning of the current chroma block.

Even when the luma block corresponding to the current chroma block is determined to be partitioned into a plurality of luma blocks at a next level, the current chroma block may not be partitioned any more. Discontinuation of partitioning of the current chroma block means that the current chroma block is not partitioned into a plurality of chroma blocks corresponding to the plurality of luma blocks at the next level. Therefore, it may be understood that, when partitioning of the current chroma block is discontinued, the current chroma block has a shape where the plurality of chroma blocks at a next level are merged.

Hereinafter, in the present specification, the information indicating discontinuation of partitioning of the current chroma block is referred to as 'merge information'.

For example, when the merge information about the current chroma block indicates '0', the current chroma block may be partitioned according to the partitioning shape of the luma block corresponding to the current chroma block. That is, when the merge information about the current chroma block indicates '0', partitioning of the current chroma block may not be discontinued. On the other hand, when the merge information about the current chroma block indicates '1', partitioning of the current chroma block may be discontinued.

A partitioned block may be expressed that it is partitioned to a 'lower (next) level'. That is, a block whose size becomes small due to being partitioned is at a lower level compared to a block before being partitioned, and the block before being partitioned is at an upper level compared to the block after being partitioned.

The transmitter 120 may generate a bitstream including merge information indicating whether to discontinue partitioning of a chroma block corresponding to a luma block.

According to an embodiment, whether to partition the chroma block by using partitioning information about the luma block and whether to partition the chroma block equally to the luma block at points corresponding to respective partitioning operations for the luma block or whether to discontinue partitioning may be determined based on R-D cost calculation. Partitioning shapes of the luma block and the chroma block may be differently determined according to each picture or each slice, or may be differently determined according to each largest coding unit.

According to an embodiment, coding units included in a largest coding unit may be predicted or transformed (e.g., values of a pixel domain are transformed into values of a frequency domain) based on processing units having different sizes. In other words, the image encoding device 100 may perform a plurality of processing operations for image encoding, based on processing units having various sizes and various shapes. To encode image data, processing operations including prediction, transformation, entropy encoding, or the like are performed, and processing units having a same size may be used in all processing operations or processing units having different sizes may be used according to processing operations.

According to an embodiment, a prediction mode of a coding unit may be at least one of an intra mode, an inter mode, and a skip mode, and a particular prediction mode may be performed only on a coding unit having a particular size or shape. According to an embodiment, prediction may be performed on each of coding units and thus a prediction mode resulting in a minimum coding error may be selected.

Also, the image encoding device 100 may transform image data according to a processing unit having a size different from a coding unit. To transform the coding unit, transformation may be performed based on a data unit whose size is equal to or less than the coding unit. Hereinafter, a processing unit that is a base of transformation is referred to as 'transform unit'.

For information used in encoding, not only information about a block shape and a partition shape but also prediction-related information and transformation-related information are necessary. Thus, the encoder 110 may determine a block shape, a partition shape, prediction modes for respective coding units, a size of a transform unit for translation, or the like which result in a minimum coding error may be determined.

The encoder 110 according to an embodiment may measure a coding error of a coding unit by using Lagrangian multiplier-based R-D optimization.

The transmitter 120 according to an embodiment may output, in the form of bitstream, image data of a coding unit encoded based on at least one coding unit determined by the encoder 110 and coding mode information according to each of coding units, and may information the bitstream to a decoding device.

The encoded image data may be a result obtained by encoding residual data of an image.

The coding mode information according to each of coding units may include a block shape, a partition shape, information about prediction modes according to coding units, size information of a transform unit, or the like.

FIG. 2 illustrates a block diagram of an image decoding device 200 according to an embodiment.

The image decoding device 200 according to an embodiment includes a receiver 210 and a decoder 220. Definitions of various terms including a coding unit, block shape information, partition shape information, a transform unit, information about a prediction mode, or the like for various processing of the image decoding device 200 are same as those described above with reference to FIG. 1 and the image encoding device 100.

The receiver 210 receives and parses a bitstream of an encoded image. The receiver 210 extracts, from the parsed bitstream, image data of each largest coding unit and outputs the image data to an image data decoder 220. The receiver 210 may extract information about a current picture or a slice from a parameter set raw byte sequence payload (RBSP) about the current picture or the slice.

Also, the receiver 210 extracts, from the parsed bitstream, block shape information and partition shape information of a coding unit partitioned from a largest coding unit. The extracted block shape information and partition shape information are output to the decoder 220. That is, image data of a bit string may be partitioned into largest coding units, and the decoder 220 may decode image data of each of the largest coding units.

Also, the receiver 210 may extract, from the parsed bitstream, coding mode information according to each of coding units. The coding mode information may be set with respect to one or more coding units, and may include information about prediction modes according to coding units, size information of a transform unit, or the like.

The coding mode information extracted by the receiver 210 is information about a determined coding mode in which a minimum coding error is caused, the determination being made by an encoding terminal such as the image encoding device 100 by repeatedly performing encoding on each coding unit. Therefore, the image decoding device 200 may reconstruct an image by decoding data according to a coding scheme causing the minimum coding error.

The receiver 210 may extract coding mode information according to each of smallest coding units. When coding mode information is recorded according to each of smallest coding units, smallest coding units having information about a same coding mode may be inferred as data units included in a same largest coding unit. That is, when smallest coding units having same information are gathered and decoded, decoding based on coding units between which a coding error is smallest may be achieved.

According to an embodiment, the decoder 220 of the image decoding device 200 may determine a shape of a coding unit, based on block shape information. For example, the block shape information may include information indicating whether the coding unit has a square shape or a non-square shape. The decoder 220 may determine the shape of the coding unit by using the block shape information.

According to an embodiment, the decoder 220 may determine to which shape the coding unit is to be partitioned, based on the partition shape information. For example, the partition shape information may indicate information about a shape of at least one coding unit included in the coding unit.

According to an embodiment, the decoder 220 may determine whether the coding unit is to be partitioned or not to be partitioned, based on the partition shape information. The partition shape information may include information about at least one coding unit included in the coding unit, and when the partition shape information indicates that only one coding unit is included in the coding unit or the coding unit is not to be partitioned, the decoder 220 may determine that the coding unit including the partition shape information is not to be partitioned. When the partition shape information indicates that the coding unit is to be partitioned into a plurality of coding units, the decoder 220 may partition the coding unit into the plurality of coding units included in the coding unit, based on the partition shape information.

According to an embodiment, the partition shape information may indicate how many coding units are to be partitioned from the coding unit or may indicate in which direction the coding unit is to be partitioned. For example, the partition shape information may indicate partitioning in at least one of a vertical direction and a horizontal direction or may indicate non-partitioning.

A method of determining a coding unit according to a block shape and a partition shape will be described in detail with reference to FIGS. 10 to 23.

The decoder 220 according to an embodiment may perform partitioning of a coding unit on each of a luma component and a chroma component.

According to an embodiment, the decoder 220 may independently perform partitioning of the luma block and partitioning of the chroma block, and may perform partitioning of the chroma block, based on partitioning of the luma block. According to an embodiment, when partitioning of the chroma block is performed based on partitioning of the luma block, the receiver 210 may obtain, from a bitstream, merge information indicating whether to discontinue partitioning of the chroma block, in correspondence with the luma block. The decoder 220 may partition the chroma block by using partitioning information about the luma block and the merge information about the chroma block so as to determine a partition shape of the chroma block.

The decoder 220 reconstructs a current picture by decoding image data of each of coding units, based on coding mode information according to each of coding units. A decoding procedure may include an inverse quantization process, an inverse transform process, and a prediction process including intra prediction and motion compensation.

In more detail, the decoder 220 may re-align an entropy-decoded bitstream according to a re-aligning method performed by the image encoding device 100. The decoder 220 may reconstruct coefficients expressed in a one-dimensional vector to coefficients of a two-dimensional block and thus may re-align the coefficients. The decoder 220 may receive information related to coefficient scanning performed by the image encoding device 100, and may perform re-alignment by using an inverse-scanning method based on a scanning order performed by the image encoding device 100. Also, the decoder 220 may perform inverse quantization based on a quantization parameter and coefficient data of a re-aligned block which are provided by the image encoding device 100. The decoder 220 may perform inverse transform such as inverse discrete cosine transform (DCT) or the like on a result of quantization performed by the image encoding device 100, in correspondence with transformation such as DCT performed by the image encoding device 100. The inverse transform may be performed based on a transmission unit or a partition unit of an image, which is determined by the image encoding device 100.

The decoder 220 may generate prediction data of a coding unit, based on prediction-related information provided by the receiver 210 and information about a previously-decoded block and/or picture. Reconstruction data may be generated by using the prediction data of the coding unit and residual data. A prediction method performed by the decoder 220 is same as a prediction method performed by the encoder 110 of the image encoding device 100.

The image decoding device 200 according to an embodiment may obtain information about a coding unit that causes a minimum coding error when encoding is recursively performed on each largest coding unit in an encoding procedure, and may use the information to decode the current picture. That is, image data of each coding unit may be decoded based on an optimal coding unit structure.

Accordingly, even when an image has high resolution or has an excessively large data amount, image data may be efficiently decoded and reconstructed by using a size of a coding unit and a coding mode, which are adaptively determined according to characteristics of the image, by using optimal coding mode information transmitted by an encoding terminal.

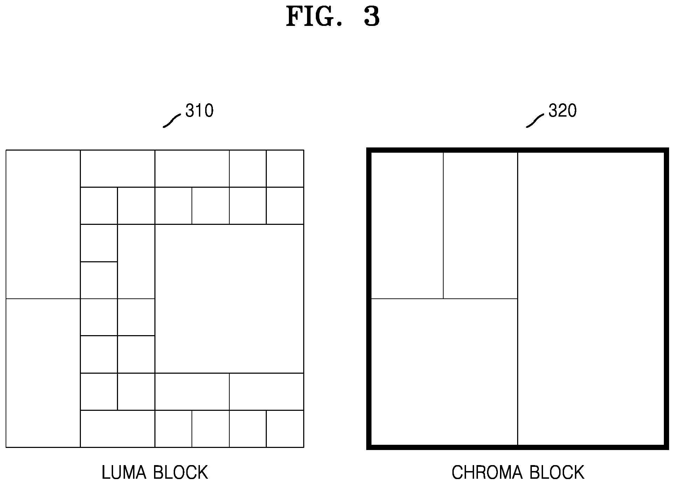

FIG. 3 illustrates a luma block 310 and a chroma block 320 according to an embodiment.

Each of coding units configuring one frame may be expressed as a Y block, a Cb block, and a Cr block. The Y block is a luma block having brightness information, and the Cb block and the Cr block are chroma blocks having color information.

Based on a fact that human eyes are generally more sensitive to brightness information rather than color information, a chroma component may be expressed as a small amount of data, compared to a luma component. For example, one coding unit may consist of, based on a 4:2:0 format, a HxW luma block (where H and W are positive integers) and two chroma blocks each having (H/2)x(W/2) size obtained by sampling a chroma block by 1/4. Also, for example, one coding unit may consist of, based on a 4:2:2 format, a HxW luma block (where H and W are positive integers) and two chroma blocks each having Hx(W/2) size obtained by horizontally sampling a chroma block by 1/2. Also, to more precisely express a chroma component image, one coding unit may consist of, based on a 4:4:4 format, image data of a luma block and a chroma block each having HxW size, without a sampling process with respect to a chroma component.

For example, a luma component coding unit and a chroma component coding unit may be one of image signals of 4:2:0, 4:2:2 and 4:4:4 color formats defined in a YCbCr (or, YUV) color space.

According to an embodiment, a luma block and a chroma block may be independently partitioned, or the chroma block may be partitioned dependently on the luma block. For example, a partition of the chroma block may be equal to a partition of the luma block or may correspond to a merge of some partitions from among partitions of the luma block.

Referring to FIG. 3, each of partitions of the chroma block 320 may correspond to a merge of one or more partitions from among partitions of the luma block 310 corresponding to the chroma block 320. That is, according to an embodiment, the number of partitions partitioned from the luma block 310 may be equal to or greater than the number of partitions partitioned from the chroma block 320 corresponding to the luma block 310.

Partitioning of the luma block 310 and the chroma block 320 may be performed in a same way of partitioning a coding unit which will be described at a later time with reference to FIGS. 10 to 23. For example, the luma block 310 and the chroma block 320 may be partitioned into blocks having a square shape or a non-square shape. Also, the luma block 310 and the chroma block 320 may be partitioned based on at least one of block shape information and partition shape information.

For example, as illustrated in FIG. 10, the luma block 310 or the chroma block 320 may be partitioned in a vertical direction, based on the partition shape information indicating partitioning in the vertical direction. Also, the luma block 310 or the chroma block 320 may be partitioned in a horizontal direction, based on the partition shape information indicating partitioning in the horizontal direction. Also, the luma block 310 or the chroma block 320 may be partitioned in horizontal and vertical directions, based on the partition shape information indicating partitioning in the horizontal and vertical directions.

Also, the luma block 310 and/or the chroma block 320 may have a non-square shape. In this case, information about whether a shape of the luma block 310 and/or the chroma block 320 is a square or a non-square is signalled as the block shape information.

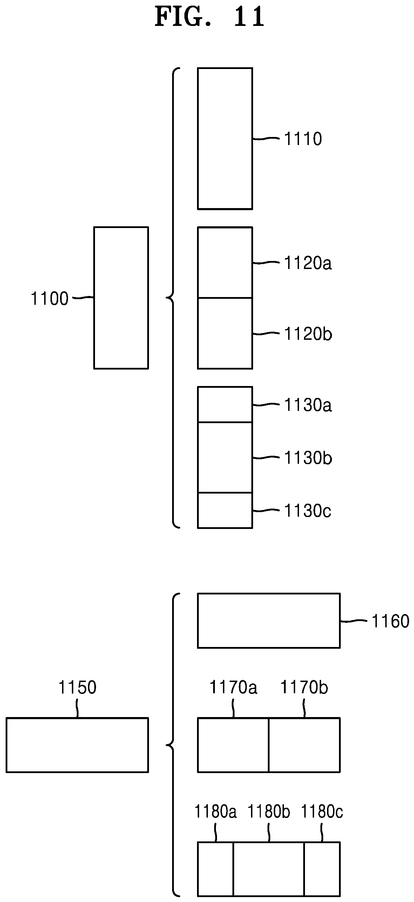

For example, as illustrated in FIG. 11, the non-square luma block 310 or the non-square chroma block 320 may be partitioned into two square blocks, or may be partitioned into three blocks in a same direction, the three blocks including two non-square blocks and one square block, based on the partition shape information.

When partitioning of the luma block 310 or the chroma block 320 is individually performed by using partitioning information (e.g., the block shape information and/or the partition shape information) about each of the luma block 310 or the chroma block 320, the amount of information signalled from the image encoding device 100 to the image decoding device 200 may be increased.

Therefore, when the chroma block 320 is partitioned according to an embodiment, partitioning information about the chroma block 320 is not separately used, but partitioning information about the luma block 310 and merge information about the chroma block 320 may be used together. In this case, the number of bits to indicate the merge information about the chroma block 320 is relatively smaller than the number of bits to indicate the partitioning information about the chroma block 320, and thus, the amount of information to be signalled may be saved.

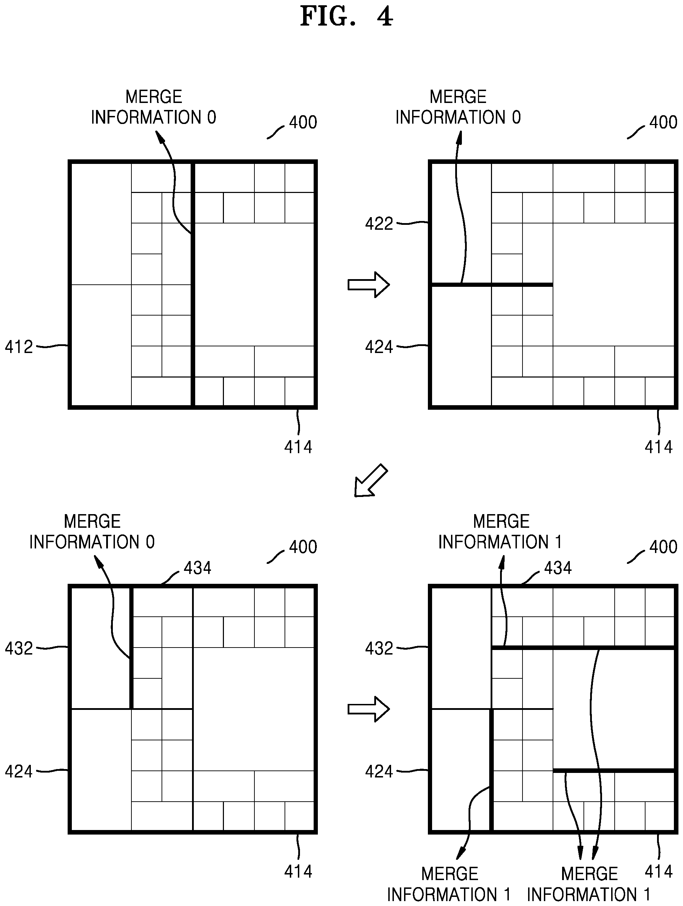

FIG. 4 illustrates a process of determining a partition of a chroma block 400 according to an embodiment.

The chroma block 400 of FIG. 4 corresponds to the chroma block 320 of FIG. 3, and as described above, partitions of the chroma blocks 320 and 400 may be determined, in consideration of a partitioning process with respect to partitions of the luma block 310.

According to an embodiment, first, the chroma block 400 having a square shape may be partitioned in a vertical direction and thus may be partitioned into chroma blocks 412 and 414 each having a vertically-long non-square shape. The partitioning of the chroma block 400 is equal to partitioning of a luma block corresponding thereto. Therefore, information indicating that the chroma block 400 is partitioned according to a partitioning shape of the luma block corresponding thereto may be signalled from the image encoding device 100 to the image decoding device 200. In this case, merge information (e.g., a merge information flag '0') about the chroma block 400 may be signalled.

According to an embodiment, secondly, the chroma block 412 having a non-square shape may be partitioned in a horizontal direction and thus may be partitioned into chroma blocks 422 and 424 each having a square shape. The partitioning of the chroma block 412 is equal to partitioning of a luma block corresponding thereto. Therefore, information indicating that the chroma block 412 is to be partitioned according to a partitioning shape of the luma block corresponding thereto may be signalled from the image encoding device 100 to the image decoding device 200. In this case, merge information (e.g., a merge information flag '0') about the chroma block 412 may be signalled.

According to an embodiment, thirdly, the chroma block 422 having a square shape may be partitioned in a vertical direction and thus may be partitioned into chroma blocks 432 and 434 each having a vertically-long non-square shape. The partitioning of the chroma block 422 is equal to partitioning of a luma block corresponding thereto. Therefore, information indicating that the chroma block 422 is to be partitioned according to a partitioning shape of the luma block corresponding thereto may be signalled from the image encoding device 100 to the image decoding device 200. In this case, merge information (e.g., a merge information flag '0') about the chroma block 422 may be signalled.

According to an embodiment, fourthly, each of the chroma blocks 414, 424, and 434 partitioned from the chroma block 400 may not be partitioned any more. In this case, the partitioning shapes of the luma blocks respectively corresponding to the chroma blocks 414, 424, and 434 are not referred to any more. Therefore, information indicating that partitioning of the chroma blocks 414, 424, and 434 is to be discontinued may be signalled from the image encoding device 100 to the image decoding device 200. In this case, merge information (e.g., a merge information flag '1') with respect to each of the chroma blocks 414, 424, and 434 may be signalled. Merge information about the chroma block 432 is not required to be signalled. It is because the luma block corresponding to the chroma block 432 is not partitioned any more.

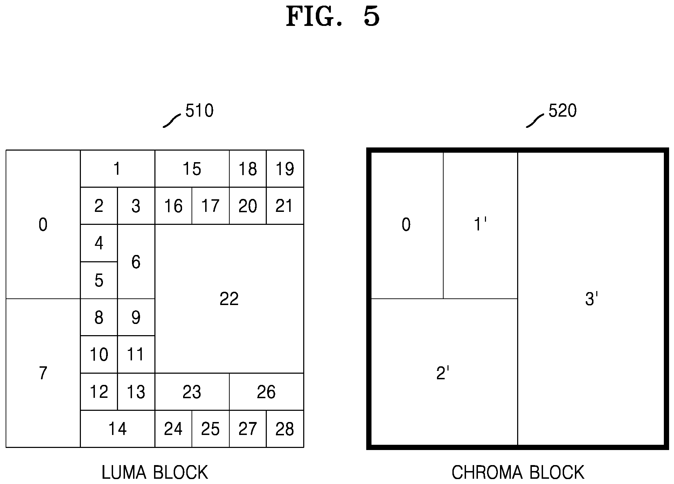

FIG. 5 illustrates a partition of a luma block 510 and a partition of a chroma block 520 according to an embodiment.

Referring to FIG. 5, the luma block 510 corresponds to the chroma block 520. According to an embodiment, the luma block 510 may be a coding unit (or a largest coding unit) of a luma component, and the chroma block 520 may be a coding unit (or a largest coding unit) of a chroma component.

According to an embodiment, the number of partitions of the chroma block 520 may be equal to or less than the number of partitions of the luma block 510. Also, a size of each partition of the chroma block 520 may be equal to or greater than a size of each partition of the luma block 510 corresponding thereto.

According to an embodiment, partitioning of the luma block 510 may be performed in a same way of partitioning a coding unit which will be described at a later time with reference to FIGS. 10 to 23. For example, each partition of the luma block 510 may consist of square or non-square blocks. Also, each partition of the luma block 510 may be recursively partitioned based on at least one of block shape information and partition shape information.

According to an embodiment, when each partition of the luma block 510 is partitioned, whether to partition each partition of the chroma block 520 corresponding to each partition of the luma block 510 may be determined based on merge information.

Referring to FIG. 5, a chroma block having number 0 of the chroma block 520 has a same partition shape as a luma block having number 0 of the luma block 510. However, a chroma block having number 1' has a partition shape including luma blocks having numbers 1 to 6, a chroma block having number 2' has a partition shape including luma blocks having numbers 7 to 14, and a chroma block having number 3' has a partition shape including luma blocks having numbers 15 to 28. The reason why a partition shape of the chroma block 520 is different from a partition shape of the luma block 510 is because partitioning is discontinued at the chroma block having number 1', the chroma block having number 2', and the chroma block having number 3' without a merge information flag 1 with respect to the chroma block having number 1', the chroma block having number 2', and the chroma block having number 3' being signalled and thus a partitioning process with respect to the luma block 510 being referred to.

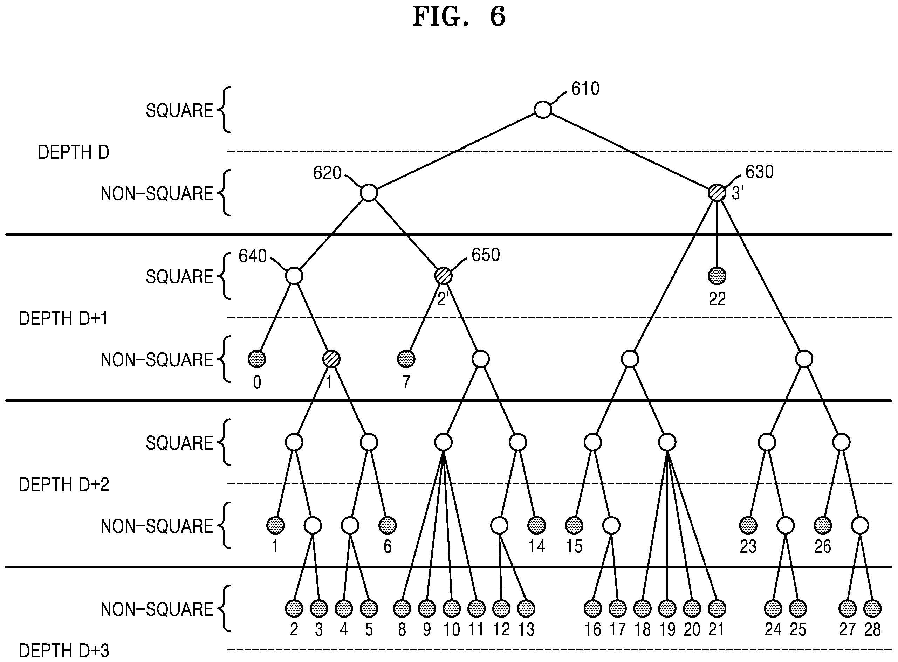

A detail process of partitioning a chroma block and a point of signalling merge information about a chroma block will now be described in detail with reference to FIG. 6.

FIG. 6 illustrates a partitioning tree structure of a luma block and a partitioning tree structure of a chroma block according to an embodiment.

The partitioning tree structure of the luma block and the partitioning tree structure of the chroma block of FIG. 6 indicate partitioning with respect to the luma block 510 and the chroma block 520 of FIG. 5. Therefore, a luma block 610 having a square shape of FIG. 6 corresponds to the luma block 510 of FIG. 5, and a chroma block 610 having a square shape of FIG. 6 corresponds to the chroma block 520 of FIG. 5.

According to an embodiment, the luma block 610 may be partitioned in at least one direction based on partitioning information and may be partitioned into at least two luma blocks 620 and 630. According to an embodiment, partitioning information about the luma block 610 may be obtained from a bitstream. The luma block 620 corresponds to an area including luma blocks having numbers 0 to 14 of FIG. 5, and the luma block 630 corresponds to an area including luma blocks having numbers 15 to 28 of FIG. 5.

According to an embodiment, when the luma block 610 is partitioned into the luma blocks 620 and 630 based on the partitioning information, merge information about the chroma block 610 corresponding to the luma block 610 may be obtained from the bitstream. When the merge information about the chroma block 610 indicates that partitioning of a chroma block is not discontinued (that is, partitioning is performed to be equal to a partition shape of a luma block corresponding thereto is indicated), the chroma block 610 may be partitioned into at least two chroma blocks 620 and 630 corresponding to the at least two luma blocks 620 and 630. According to an embodiment, as information indicating that partitioning of a chroma block is not to be discontinued, a merge information flag '0' may be signalled. The chroma block 620 corresponds to an area including chroma blocks having numbers 0, 1', and 2' of FIG. 5, and the chroma block 630 corresponds to an area including a chroma block having number 3' of FIG. 5.

According to an embodiment, the luma block 620 may be partitioned in at least one direction based on partitioning information and thus may be partitioned into at least two luma blocks 640 and 650. The luma block 640 corresponds to an area including luma blocks having numbers 0 to 6 of FIG. 5, and the luma block 650 corresponds to an area including luma blocks having numbers 7 to 14 of FIG. 5.

According to an embodiment, when the luma block 620 is partitioned into the luma blocks 640 and 650 based on the partitioning information, merge information about the chroma block 620 corresponding to the luma block 620 may be obtained from the bitstream. When the merge information about the chroma block 620 indicates that partitioning of a chroma block is not discontinued (that is, partitioning is performed to be equal to a partition shape of a luma block corresponding thereto is indicated), the chroma block 620 may be partitioned into at least two chroma blocks 640 and 650 corresponding to the at least two luma blocks 640 and 650. According to an embodiment, as information indicating that partitioning of a chroma block is not to be discontinued, a merge information flag '0' may be signalled. The chroma block 640 corresponds to an area including chroma blocks having numbers 0 and 1' of FIG. 5, and the chroma block 650 corresponds to an area including a chroma block having number 2' of FIG. 5.

According to an embodiment, the luma block 630 may be partitioned in at least one direction based on partitioning information and thus may be partitioned into at least two luma blocks.

According to an embodiment, when the luma block 630 is partitioned into the at least two luma blocks based on the partitioning information, merge information about the chroma block 630 corresponding to the luma block 630 may be obtained from the bitstream. When the merge information about the chroma block 630 indicates that partitioning of a chroma block is discontinued, the chroma block 630 may not be partitioned any more. According to an embodiment, as information indicating that partitioning of a chroma block is to be discontinued, a merge information flag '1' may be signalled. The chroma block 630 corresponds to an area including a chroma block having number 3' of FIG. 5.

According to an embodiment, the luma block 610 may be recursively partitioned into a plurality of partitions, based on the partitioning information. Also, according to an embodiment, whether to partition or not to partition each partition of the chroma block 610 in a same manner as each partition of the luma block 610 by using merge information at a partitioning point (junction) of each partition of the luma block 610 corresponding thereto may be determined.

Referring to FIG. 6, a final partition of the luma block 610 consists of luma blocks having numbers 0 to 28, and a final partition of the chroma block 610 consists of chroma blocks having numbers 0, 1', 2', and 3'. That is, in the chroma blocks having numbers 0, 1', 2', and 3' which is the final partition of the chroma block 610, a merge information flag 1 is signalled. On the other hand, in upper chroma blocks (e.g., the chroma blocks 610, 620, and 640) of the chroma blocks having numbers 0, 1', 2', and 3', a merge information flag 0 is signalled.

According to an embodiment, merge information about a chroma block may be signalled only when a luma block corresponding thereto is partitioned based on partitioning information. When the luma block is not partitioned, the merge information about the chroma block corresponding thereto may not be obtained.

Also, because partitioning cannot be performed on a chroma block corresponding to a luma block that is not partitioned any more (e.g., when a size of the luma block is smallest or partitioning information about the luma block indicates non-partitioning), it is not required to signal merge information about the chroma block. Therefore, an amount of information to be signalled may be saved. For example, for a chroma block having number 0 corresponding to a luma block having number 0 that is not partitioned any more, a merge information flag may not be transmitted nor received.

According to an embodiment, a luma block and a chroma block that are not partitioned any more may be decoded (or encoded).

In the aforementioned embodiment, it is described that the partitioning information about the luma block and the merge information about the chroma block are obtained from the bitstream with respect to a decoding aspect, but with respect to an encoding aspect, the partitioning information about the luma block and the merge information about the chroma block may be determined based on R-D cost calculation and thus may be transmitted to a decoder.

According to an embodiment, a use of a method of partitioning a chroma block by using merge information according to the aforementioned embodiment may be limited.

According to an embodiment, whether to use merge information about a chroma block may be determined with respect to a largest coding unit. For example, based on at least one of a size and a gradient of a largest coding unit including a current chroma block, whether to partition the current chroma block into at least two chroma blocks may be determined. Also, for example, separate flags may be signalled according to respective largest coding units and thus whether to use a method of partitioning a chroma block by using merge information may be determined.

According to an embodiment, whether to partition a chroma may be determined block based on a depth. For example, when a depth of at least two chroma blocks partitioned from the current chroma block is greater than a predetermined depth, the current chroma block may be partitioned according to a same partition shape as a luma block corresponding to the current chroma block, regardless of merge information. Also, for example, when the depth of at least two chroma blocks partitioned from the current chroma block is less than the predetermined depth, the current chroma block may be partitioned according to a same partition shape as the luma block corresponding to the current chroma block, regardless of the merge information. In the aforementioned examples, the merge information may not be signalled.

Referring to FIG. 6, at each depth, a block may have a square shape or a non-square shape. According to an embodiment, a depth may be determined based on a predetermined reference, and for example, the predetermined reference may be a length of a long side of the block.

According to an embodiment, when a square block is partitioned into non-square blocks, the square block before being partitioned and the non-square blocks after being partitioned may have a same depth. Also, when a square block is partitioned into square blocks, a depth of the square blocks after being partitioned may be increased by '1', compared to a depth of the square block before being partitioned. Also, when a non-square block is partitioned into square blocks, a depth of the square blocks after being partitioned may be increased by '1', compared to a depth of the non-square block before being partitioned.

Regardless of a block shape and a depth, a block on which partitioning is performed may be expressed as it is partitioned into a lower (next) level'. That is, the block whose size is decreased after being partitioned has a lower level, compared to a block before being partitioned, and the block before being partitioned has an upper level, compared to the block after being partitioned.

According to an embodiment, whether to partition a chroma block may be determined based on a level. For example, when a level of at least two chroma blocks partitioned from the current chroma block is greater than a predetermined level, the current chroma block may be partitioned according to a same partition shape as the luma block corresponding to the current chroma block, regardless of the merge information. Also, for example, when the level of at least two chroma blocks partitioned from the current chroma block is less than the predetermined level, the current chroma block may be partitioned a the same partition shape as the luma block corresponding to the current chroma block, regardless of the merge information.

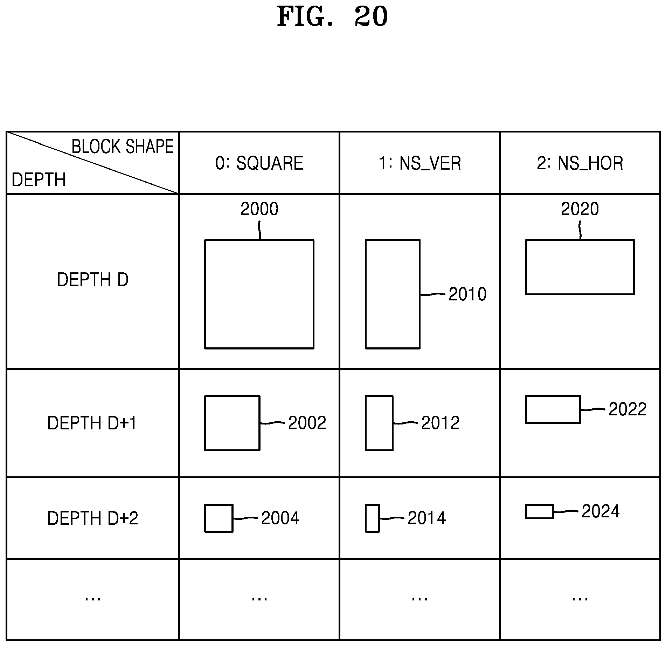

According to an embodiment, the merge information may not be signalled. A concept of a depth will be described in detail with reference to FIGS. 20 to 21. According to an embodiment, whether to partition a chroma block may be determined based on a size of a block. For example, when a size of the current chroma block is greater than a predetermined size, the current chroma block may be partitioned according to a same partition shape as the luma block corresponding to the current chroma block, regardless of the merge information. For example, when the size of the current chroma block is less than the predetermined size, the current chroma block may be partitioned according to the same partition shape as the luma block corresponding to the current chroma block, regardless of the merge information. Equally, in the aforementioned examples, the merge information may not be signalled.

According to an embodiment, whether to partition a chroma block may be determined based on a block shape. For example, when a shape of the current chroma block is square, the current chroma block may be partitioned according to a same partition shape as the luma block corresponding to the current chroma block, regardless of the merge information. Also, for example, when the shape of the current chroma block is not square, the current chroma block may be partitioned according to the same partition shape as the luma block corresponding to the current chroma block, regardless of the merge information. Equally, in the aforementioned examples, the merge information may not be signalled.

The block shape will be described in detail with reference to FIGS. 10 to 12.

According to an embodiment, when a chroma block is partitioned, signalling of coding-related information (e.g., a prediction mode, a prediction parameter, or the like) about the chroma block may be merged by using merge information. For example, when intra prediction modes of respective chroma blocks use a same prediction mode as a luma block, a prediction mode of each of the chroma blocks may not be signalled but the prediction mode may be signalled via one signalling by using the merge information.

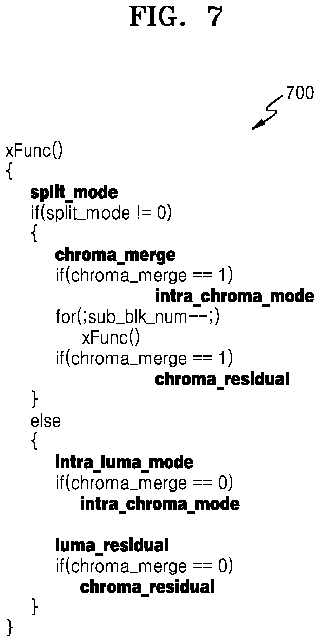

FIG. 7 illustrates syntax 700 indicating merge information about a chroma block according to an embodiment.

Referring to FIG. 7, prediction with respect to the chroma block is performed ('intra_chroma_mode') based on syntax 'split_mode' indicating partitioning information and syntax 'chroma_merge' indicating the merge information, and a residual ('chroma_residual') with respect to the chroma block is generated.

Also, when the syntax 'split_mode' indicating partitioning information does not indicate to partition a block, prediction with respect to a luma block is performed ('intra_chroma_mode'), and a residual ('luma_residual') is generated.

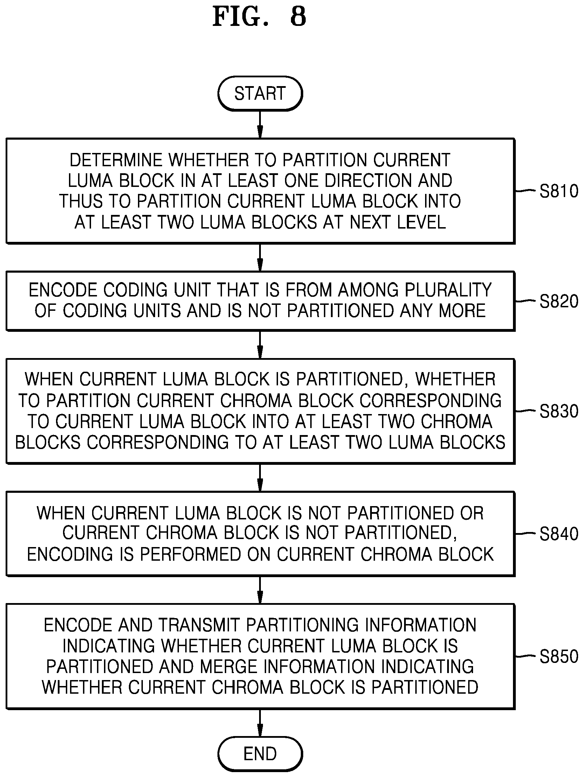

FIG. 8 illustrates a flowchart for describing an image encoding method according to an embodiment.

In operation S810, whether to partition a current luma block in at least one direction and thus to partition the current luma block into at least two luma blocks at a next level is determined.

In operation S820, when the current luma block is not partitioned, encoding is performed on the current luma block.

In operation S830, when the current luma block is partitioned, whether to partition a current chroma block corresponding to the current luma block into at least two chroma blocks corresponding to the at least two luma blocks is determined.

In operation S840, when the current luma block is not partitioned or the current chroma block is not partitioned, encoding is performed on the current chroma block.

In operation S850, partitioning information indicating whether the current luma block is to be partitioned and merge information indicating whether the current chroma block is to be partitioned are encoded and transmitted.

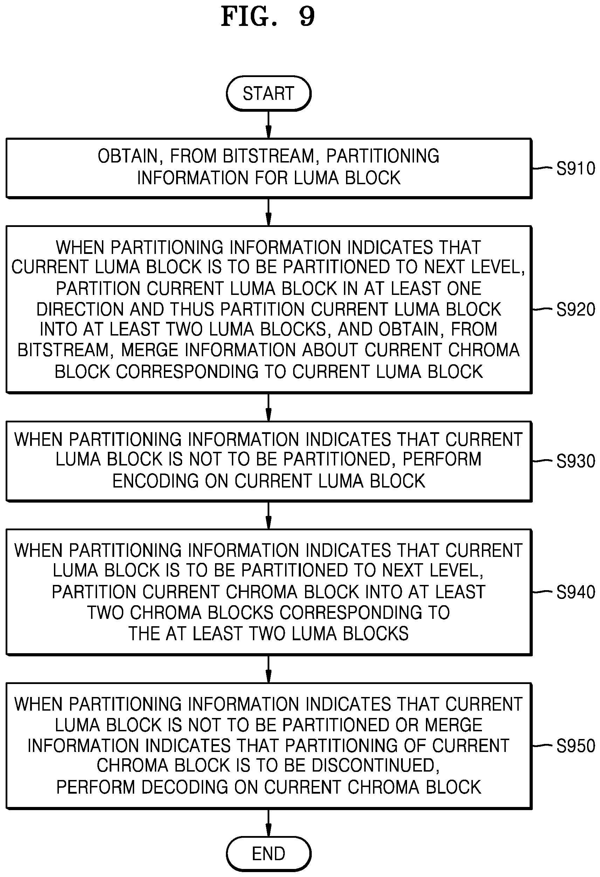

FIG. 9 illustrates a flowchart for describing an image decoding method according to an embodiment.

In operation S910, partitioning information for a luma block is obtained from a bitstream.

In operation S920, when the partitioning information indicates that a current luma block is to be partitioned to a next level, the current luma block is partitioned in at least one direction and thus is partitioned into at least two luma blocks, and merge information about a current chroma block corresponding to the current luma block is obtained from the bitstream.

In operation S930, when the partitioning information indicates that the current luma block is not to be partitioned, encoding is performed on the current luma block.

In operation S940, when the partitioning information indicates that the current luma block is to be partitioned to the next level, the current chroma block is partitioned into at least two chroma blocks corresponding to the at least two luma blocks.

In operation S950, when the partitioning information indicates that the current luma block is not to be partitioned or the merge information indicates that the current chroma block is to be merged, decoding is performed on the current chroma block.

Hereinafter, with reference to FIGS. 10 to 23, a method of determining a data unit of an image according to an embodiment will now be described.

FIG. 10 illustrates a procedure, performed by the image decoding device 200, of determining at least one coding unit by partitioning a current coding unit, according to an embodiment.

According to an embodiment, the image decoding device 200 may determine a shape of a coding unit by using block shape information, and may determine a partitioning method of the coding unit by using partition shape information. That is, a coding unit partitioning method indicated by the partition shape information may be determined based on a block shape indicated by the block shape information used by the image decoding device 200.

According to an embodiment, the image decoding device 200 may use the block shape information indicating that the current coding unit has a square shape. For example, the image decoding device 200 may determine whether not to partition a square coding unit, whether to vertically partition the square coding unit, whether to horizontally partition the square coding unit, or whether to partition the square coding unit into four coding units, based on the partition shape information. Referring to FIG. 10, when the block shape information of a current coding unit 1000 indicates a square shape, a decoder may determine that a coding unit 1010a having the same size as the current coding unit 1000 is not partitioned, based on the partition shape information indicating not to perform partitioning, or may determine coding units 1010b, 1010c, or 1010d partitioned based on the partition shape information indicating a predetermined partitioning method.

Referring to FIG. 10, according to an embodiment, the image decoding device 200 may determine two coding units 1010b obtained by partitioning the current coding unit 1000 in a vertical direction, based on the partition shape information indicating to perform partitioning in a vertical direction. The image decoding device 200 may determine two coding units 1010c obtained by partitioning the current coding unit 1000 in a horizontal direction, based on the partition shape information indicating to perform partitioning in a horizontal direction. The image decoding device 200 may determine four coding units 1010d obtained by partitioning the current coding unit 1000 in vertical and horizontal directions, based on the partition shape information indicating to perform partitioning in vertical and horizontal directions. However, partitioning methods of the square coding unit are not limited to the above-described methods, and the partition shape information may indicate various methods. Predetermined partitioning methods of partitioning the square coding unit will be described in detail below in relation to various embodiments.

FIG. 11 illustrates an operation, performed by the image decoding device 200, of determining one or more coding units by partitioning a non-square coding unit, according to an embodiment.

According to an embodiment, the image decoding device 200 may use block shape information indicating that a current coding unit has a non-square shape. The image decoding device 200 may determine whether not to partition the non-square current coding unit or whether to partition the non-square current coding unit by using a predetermined partitioning method, based on partition shape information. Referring to FIG. 11, when the block shape information of a current coding unit 1100 or 1150 indicates a non-square shape, the image decoding device 200 may determine that a coding unit 1110 or 1160 having the same size as the current coding unit 1100 or 1150 is not partitioned, based on the partition shape information indicating not to perform partitioning, or determine coding units 1120a and 1120b, 1130a to 1130c, 1170a and 1170b, or 1180a to 1180c partitioned based on the partition shape information indicating a predetermined partitioning method. Predetermined partitioning methods of partitioning a non-square coding unit will be described in detail below in relation to various embodiments.

According to an embodiment, the image decoding device 200 may determine a partitioning method of a coding unit by using the partition shape information and, in this case, the partition shape information may indicate the number of one or more coding units generated by partitioning a coding unit. Referring to FIG. 11, when the partition shape information indicates to partition the current coding unit 1100 or 1150 into two coding units, the image decoding device 200 may determine two coding units 1120a and 1120b, or 1170a and 1170b included in the current coding unit 1100 or 1150, by partitioning the current coding unit 1100 or 1150 based on the partition shape information.

According to an embodiment, when the image decoding device 200 partitions the non-square current coding unit 1100 or 1150 based on the partition shape information, the location of a long side of the non-square current coding unit 1100 or 1150 may be considered. For example, the image decoding device 200 may determine a plurality of coding units by dividing a long side of the current coding unit 1100 or 1150 considering the shape of the current coding unit 1100 or 1150.

According to an embodiment, when the partition shape information indicates to partition a coding unit into an odd number of blocks, the image decoding device 200 may determine an odd number of coding units included in the current coding unit 1100 or 1150. For example, when the partition shape information indicates to partition the current coding unit 1100 or 1150 into three coding units, the image decoding device 200 may partition the current coding unit 1100 or 1150 into three coding units 1130a, 1130b, and 1130c, or 1180a, 1180b, and 1180c. According to an embodiment, the image decoding device 200 may determine an odd number of coding units included in the current coding unit 1100 or 1150, and not all the determined coding units have the same size. For example, a predetermined coding unit 1130b or 1180b from among the determined odd number of coding units 1130a, 1130b, and 1130c, or 1180a, 1180b, and 1180c may have a size different from the size of the other coding units 1130a and 1130c, or 1180a and 1180c. That is, coding units which may be determined by partitioning the current coding unit 1100 or 1150 may have multiple sizes and, in some cases, all of the odd number of coding units 1130a, 1130b, and 1130c, or 1180a, 1180b, and 1180c may have different sizes.

According to an embodiment, when the partition shape information indicates to partition a coding unit into an odd number of blocks, the image decoding device 200 may determine an odd number of coding units included in the current coding unit 1100 or 1150, and may put a predetermined restriction on at least one coding unit from among the odd number of coding units generated by partitioning the current coding unit 1100 or 1150. Referring to FIG. 11, the image decoding device 200 may allow a decoding method of the coding unit 1130b or 1180b to be different from that of the other coding units 1130a and 1130c, or 1180a and 1180c, wherein the coding unit 1130b or 1180b is at a center location from among the three coding units 1130a, 1130b, and 1130c, or 1180a, 1180b, and 1180c generated by partitioning the current coding unit 1100 or 1150. For example, the image decoding device 200 may restrict the coding unit 1130b or 1180b at the center location to be no longer partitioned or to be partitioned by only a predetermined number of times, unlike the other coding units 1130aand 1130c, or 1180a and 1180c.

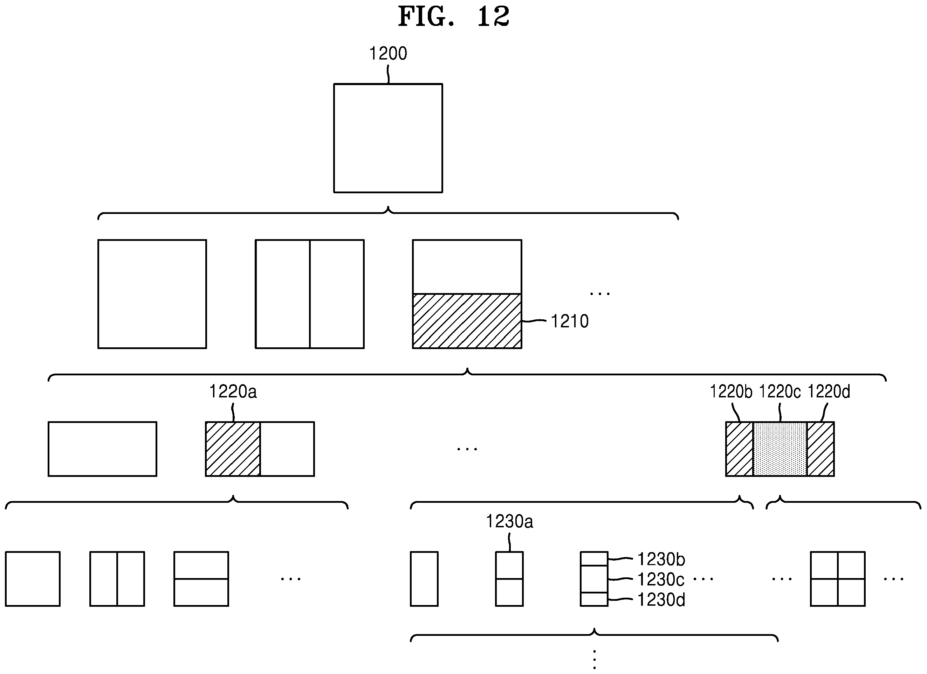

FIG. 12 illustrates an operation, performed by the image decoding device 200, of partitioning a coding unit based on at least one of block shape information and partition shape information, according to an embodiment.

According to an embodiment, the image decoding device 200 may determine to or not to partition a square first coding unit 1200 into coding units, based on at least one of the block shape information and the partition shape information. According to an embodiment, when the partition shape information indicates to partition the first coding unit 1200 in a horizontal direction, the image decoding device 200 may determine a second coding unit 1210 by partitioning the first coding unit 1200 in a horizontal direction. A first coding unit, a second coding unit, and a third coding unit used according to an embodiment are terms used to understand a relation before and after partitioning a coding unit. For example, a second coding unit may be determined by partitioning a first coding unit, and a third coding unit may be determined by partitioning the second coding unit. It will be understood that the structure of the first, second, and third coding units follows the above descriptions.

According to an embodiment, the image decoding device 200 may determine to or not to partition the determined second coding unit 1210 into coding units, based on at least one of the block shape information and the partition shape information. Referring to FIG. 12, the image decoding device 200 may or may not partition the non-square second coding unit 1210, which is determined by partitioning the first coding unit 1200, into one or more third coding units 1220a, or 1220b, 1220c, and 1220d based on at least one of the block shape information and the partition shape information. The image decoding device 200 may obtain at least one of the block shape information and the partition shape information, and determine a plurality of various-shaped second coding units (e.g., 1210) by partitioning the first coding unit 1200, based on the obtained at least one of the block shape information and the partition shape information, and the second coding unit 1210 may be partitioned by using the partitioning method of the first coding unit 1200, based on at least one of the block shape information and the partition shape information. According to an embodiment, when the first coding unit 1200 is partitioned into the second coding units 1210 based on at least one of the block shape information and the partition shape information of the first coding unit 1200, the second coding unit 1210 may also be partitioned into the third coding units 1220a, or 1220b, 1220c, and 1220d based on at least one of the block shape information and the partition shape information of the second coding unit 1210. That is, a coding unit may be recursively partitioned based on at least one of the block shape information and the partition shape information of each coding unit. Therefore, a square coding unit may be determined by partitioning a non-square coding unit, and a non-square coding unit may be determined by recursively partitioning the square coding unit. Referring to FIG. 12, a predetermined coding unit from among an odd number of third coding units 1220b, 1220c, and 1220d determined by partitioning the non-square second coding unit 1210 (e.g., a coding unit at a center location or a square coding unit) may be recursively partitioned. According to an embodiment, the square third coding unit 1220c from among the odd number of third coding units 1220b, 1220c, and 1220d may be partitioned in a horizontal direction into a plurality of fourth coding units. A non-square fourth coding unit from among the plurality of fourth coding units may be partitioned into a plurality of coding units. For example, the non-square fourth coding unit 1240 may be partitioned into an odd number of coding units.

A method that may be used to recursively partition a coding unit will be described below in relation to various embodiments.

According to an embodiment, the image decoding device 200 may determine to partition each of the third coding units 1220a, or 1220b, 1220c, and 1220d into coding units or not to partition the second coding unit 1210, based on at least one of the block shape information and the partition shape information. According to an embodiment, the image decoding device 200 may partition the non-square second coding unit 1210 into the odd number of third coding units 1220b, 1220c, and 1220d. The image decoding device 200 may put a predetermined restriction on a predetermined third coding unit from among the odd number of third coding units 1220b, 1220c, and 1220d. For example, the image decoding device 200 may restrict the third coding unit 1220c at a center location from among the odd number of third coding units 1220b, 1220c, and 1220d to be no longer partitioned or to be partitioned by a settable number of times. Referring to FIG. 12, the image decoding device 200 may restrict the third coding unit 1220c, which is at the center location from among the odd number of third coding units 1220b, 1220c, and 1220d included in the non-square second coding unit 1210, to be no longer partitioned, to be partitioned by using a predetermined partitioning method (e.g., partitioned into only four coding units or partitioned by using a partitioning method of the second coding unit 1210), or to be partitioned by only a predetermined number of times (e.g., partitioned by only n times (where n>0)). However, the restrictions on the third coding unit 1220c at the center location are not limited to the above-described examples, and may include various restrictions for decoding the third coding unit 1220c at the center location differently from the other third coding units 1220b and 1220d.

According to an embodiment, the image decoding device 200 may obtain at least one of the block shape information and the partition shape information, which is used to partition a current coding unit, from a predetermined location in the current coding unit.

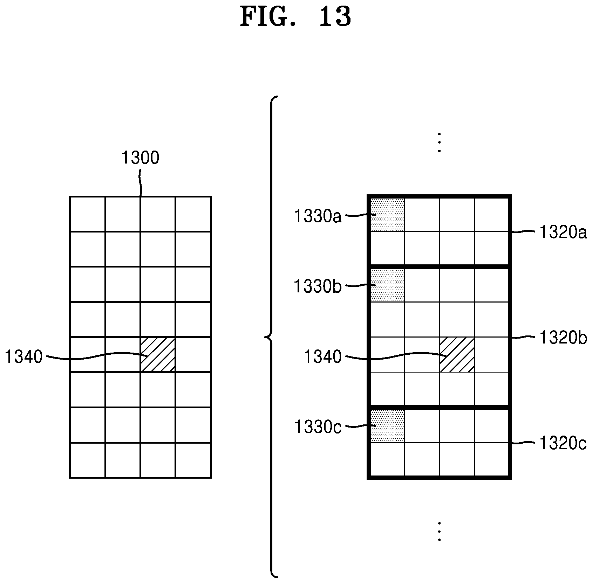

FIG. 13 illustrates a method, performed by the image decoding device 200, of determining a predetermined coding unit from among an odd number of coding units, according to an embodiment. Referring to FIG. 13, at least one of block shape information and partition shape information of a current coding unit 1300 may be obtained from a sample of a predetermined location from among a plurality of samples included in the current coding unit 1300 (e.g., a sample 1340 of a center location). However, the predetermined location in the current coding unit 1300, from which at least one of the block shape information and the partition shape information may be obtained, is not limited to the center location in FIG. 13, and may include various locations included in the current coding unit 1300 (e.g., top, bottom, left, right, top left, bottom left, top right, and bottom right locations). The image decoding device 200 may obtain at least one of the block shape information and the partition shape information from the predetermined location and determine to or not to partition the current coding unit into various-shaped and various-sized coding units.

According to an embodiment, when the current coding unit is partitioned into a predetermined number of coding units, the image decoding device 200 may select one of the coding units. Various methods may be used to select one of a plurality of coding units, as will be described below in relation to various embodiments.

According to an embodiment, the image decoding device 200 may partition the current coding unit into a plurality of coding units, and may determine a coding unit at a predetermined location.

FIG. 13 illustrates a method, performed by the image decoding device 200, of determining a coding unit of a predetermined location from among an odd number of coding units, according to an embodiment.

According to an embodiment, the image decoding device 200 may use information indicating locations of the odd number of coding units, to determine a coding unit at a center location from among the odd number of coding units. Referring to FIG. 13, the image decoding device 200 may determine an odd number of coding units 1320a, 1320b, and 1320c by partitioning the current coding unit 1300. The image decoding device 200 may determine a coding unit 1320b at a center location by using information about locations of the odd number of coding units 1320a to 1320c. For example, the image decoding device 200 may determine the coding unit 1320b of the center location by determining the locations of the coding units 1320a, 1320b, and 1320c based on information indicating locations of predetermined samples included in the coding units 1320a, 1320b, and 1320c. In detail, the image decoding device 200 may determine the coding unit 1320b at the center location by determining the locations of the coding units 1320a, 1320b, and 1320c based on information indicating locations of top left samples 1330a, 1330b, and 1330c of the coding units 1320a, 1320b, and 1320c.

According to an embodiment, the information indicating the locations of the top left samples 1330a, 1330b, and 1330c, which are included in the coding units 1320a, 1320b, and 1320c, respectively, may include information about locations or coordinates of the coding units 1320a, 1320b, and 1320c in a picture. According to an embodiment, the information indicating the locations of the top left samples 1330a, 1330b, and 1330c, which are included in the coding units 1320a, 1320b, and 1320c, respectively, may include information indicating widths or heights of the coding units 1320a, 1320b, and 1320c included in the current coding unit 1300, and the widths or heights may correspond to information indicating differences between the coordinates of the coding units 1320a, 1320b, and 1320c in the picture. That is, the image decoding device 200 may determine the coding unit 1320b at the center location by directly using the information about the locations or coordinates of the coding units 1320a, 1320b, and 1320c in the picture, or by using the information about the widths or heights of the coding units, which correspond to the difference values between the coordinates.

According to an embodiment, information indicating the location of the top left sample 1330a of the upper coding unit 1320a may include coordinates (xa, ya), information indicating the location of the top left sample 1330b of the middle coding unit 1320b may include coordinates (xb, yb), and information indicating the location of the top left sample 1330c of the lower coding unit 1320c may include coordinates (xc, yc). The image decoding device 200 may determine the middle coding unit 1320b by using the coordinates of the top left samples 1330a, 1330b, and 1330c which are included in the coding units 1320a, 1320b, and 1320c, respectively. For example, when the coordinates of the top left samples 1330a, 1330b, and 1330c are sorted in an ascending or descending order, the coding unit 1320b including the coordinates (xb, yb) of the sample 1330b at a center location may be determined as a coding unit at a center location from among the coding units 1320a, 1320b, and 1320c determined by partitioning the current coding unit 1300. However, the coordinates indicating the locations of the top left samples 1330a, 1330b, and 1330c may include coordinates indicating absolute locations in the picture, or may use coordinates (dxb, dyb) indicating a relative location of the top left sample 1330b of the middle coding unit 1320b and coordinates (dxc, dyc) indicating a relative location of the top left sample 1330c of the lower coding unit 1320c with reference to the location of the top left sample 1330a of the upper coding unit 1320a. A method of determining a coding unit at a predetermined location by using coordinates of a sample included in the coding unit, as information indicating a location of the sample, is not limited to the above-described method, and may include various arithmetic methods capable of using the coordinates of the sample.

According to an embodiment, the image decoding device 200 may partition the current coding unit 1300 into a plurality of coding units 1320a, 1320b, and 1320c, and select one of the coding units 1320a, 1320b, and 1320c based on a predetermined criterion. For example, the image decoding device 200 may select the coding unit 1320b, which has a size different from that of the others, from among the coding units 1320a, 1320b, and 1320c.

According to an embodiment, the image decoding device 200 may determine the widths or heights of the coding units 1320a, 1320b, and 1320c by using the coordinates (xa, ya) indicating the location of the top left sample 1330a of the upper coding unit 1320a, the coordinates (xb, yb) indicating the location of the top left sample 1330b of the middle coding unit 1320b, and the coordinates (xc, yc) indicating the location of the top left sample 1330c of the lower coding unit 1320c. The image decoding device 200 may determine the sizes of the coding units 1320a, 1320b, and 1320c by using the coordinates (xa, ya), (xb, yb), and (xc, yc) indicating the locations of the coding units 1320a, 1320b, and 1320c.

According to an embodiment, the image decoding device 200 may determine the width of the upper coding unit 1320a to be xb-xa and determine the height thereof to be yb-ya. According to an embodiment, the image decoding device 200 may determine the width of the middle coding unit 1320b to be xc-xb and determine the height thereof to be yc-yb. According to an embodiment, the image decoding device 200 may determine the width or height of the lower coding unit 1320c by using the width or height of the current coding unit 1300 or the widths or heights of the upper and middle coding units 1320a and 1320b. The image decoding device 200 may determine a coding unit, which has a size different from that of the others, based on the determined widths and heights of the coding units 1320a to 1320c. Referring to FIG. 13, the image decoding device 200 may determine the middle coding unit 1320b, which has a size different from the size of the upper and lower coding units 1320a and 1320c, as the coding unit of the predetermined location. However, the above-described method, performed by the image decoding device 200, of determining a coding unit having a size different from the size of the other coding units merely corresponds to an example of determining a coding unit at a predetermined location by using the sizes of coding units, which are determined based on coordinates of samples, and thus various methods of determining a coding unit at a predetermined location by comparing the sizes of coding units, which are determined based on coordinates of predetermined samples, may be used.

However, locations of samples considered to determine locations of coding units are not limited to the above-described top left locations, and information about arbitrary locations of samples included in the coding units may be used.

According to an embodiment, the image decoding device 200 may select a coding unit at a predetermined location from among an odd number of coding units determined by partitioning the current coding unit, considering the shape of the current coding unit. For example, when the current coding unit has a non-square shape, a width of which is longer than a height, the image decoding device 200 may determine the coding unit at the predetermined location in a horizontal direction. That is, the image decoding device 200 may determine one of coding units at different locations in a horizontal direction and put a restriction on the coding unit. When the current coding unit has a non-square shape, a height of which is longer than a width, the image decoding device 200 may determine the coding unit at the predetermined location in a vertical direction. That is, the image decoding device 200 may determine one of coding units at different locations in a vertical direction and put a restriction on the coding unit.

According to an embodiment, the image decoding device 200 may use information indicating locations of an even number of coding units, to determine the coding unit at the predetermined location from among the even number of coding units. The image decoding device 200 may determine an even number of coding units by partitioning the current coding unit, and determine the coding unit at the predetermined location by using the information about the locations of the even number of coding units. An operation related thereto may correspond to the operation of determining a coding unit at a predetermined location (e.g., a center location) from among an odd number of coding units, which has been described in detail above in relation to FIG. 13, and thus detailed descriptions thereof are not provided here.

According to an embodiment, when a non-square current coding unit is partitioned into a plurality of coding units, predetermined information about a coding unit at a predetermined location may be used in a partitioning operation to determine the coding unit at the predetermined location from among the plurality of coding units. For example, the image decoding device 200 may use at least one of block shape information and partition shape information, which is stored in a sample included in a coding unit at a center location, in a partitioning operation to determine the coding unit at the center location from among the plurality of coding units determined by partitioning the current coding unit.

Referring to FIG. 13, the image decoding device 200 may partition the current coding unit 1300 into a plurality of coding units 1320a, 1320b, and 1320c based on at least one of the block shape information and the partition shape information, and determine a coding unit 1320b at a center location from among the plurality of the coding units 1320a, 1320b, and 1320c. Furthermore, the image decoding device 200 may determine the coding unit 1320b at the center location, in consideration of a location from which at least one of the block shape information and the partition shape information is obtained. That is, at least one of the block shape information and the partition shape information of the current coding unit 1300 may be obtained from the sample 1340 at a center location of the current coding unit 1300 and, when the current coding unit 1300 is partitioned into the plurality of coding units 1320a, 1320b, and 1320c based on at least one of the block shape information and the partition shape information, the coding unit 1320b including the sample 1340 may be determined as the coding unit at the center location. However, information used to determine the coding unit at the center location is not limited to at least one of the block shape information and the partition shape information, and various types of information may be used to determine the coding unit at the center location.

According to an embodiment, predetermined information for identifying the coding unit at the predetermined location may be obtained from a predetermined sample included in a coding unit to be determined. Referring to FIG. 13, the image decoding device 200 may use at least one of the block shape information and the partition shape information, which is obtained from a sample at a predetermined location in the current coding unit 1300 (e.g., a sample at a center location of the current coding unit 1300) to determine a coding unit at a predetermined location from among the plurality of the coding units 1320a, 1320b, and 1320c determined by partitioning the current coding unit 1300 (e.g., a coding unit at a center location from among a plurality of partitioned coding units). That is, the image decoding device 200 may determine the sample at the predetermined location by considering a block shape of the current coding unit 1300, determine the coding unit 1320b including a sample, from which predetermined information (e.g., at least one of the block shape information and the partition shape information) may be obtained, from among the plurality of coding units 1320a, 1320b, and 1320c determined by partitioning the current coding unit 1300, and put a predetermined restriction on the coding unit 1320b. Referring to FIG. 13, according to an embodiment, the image decoding device 200 may determine the sample 1340 at the center location of the current coding unit 1300 as the sample from which the predetermined information may be obtained, and put a predetermined restriction on the coding unit 1320b including the sample 1340, in a decoding operation. However, the location of the sample from which the predetermined information may be obtained is not limited to the above-described location, and may include arbitrary locations of samples included in the coding unit 1320b to be determined for a restriction.

According to an embodiment, the location of the sample from which the predetermined information may be obtained may be determined based on the shape of the current coding unit 1300. According to an embodiment, the block shape information may indicate whether the current coding unit has a square or non-square shape, and the location of the sample from which the predetermined information may be obtained may be determined based on the shape. For example, the image decoding device 200 may determine a sample located on a boundary for dividing at least one of a width and height of the current coding unit in half, as the sample from which the predetermined information may be obtained, by using at least one of information about the width of the current coding unit and information about the height of the current coding unit. As another example, when the block shape information of the current coding unit indicates a non-square shape, the image decoding device 200 may determine one of samples adjacent to a boundary for dividing a long side of the current coding unit in half, as the sample from which the predetermined information may be obtained.

According to an embodiment, when the current coding unit is partitioned into a plurality of coding units, the image decoding device 200 may use at least one of the block shape information and the partition shape information to determine a coding unit at a predetermined location from among the plurality of coding units. According to an embodiment, the image decoding device 200 may obtain at least one of the block shape information and the partition shape information from a sample at a predetermined location in a coding unit, and partition the plurality of coding units, which are generated by partitioning the current coding unit, by using at least one of the partition shape information and the block shape information, which is obtained from the sample of the predetermined location in each of the plurality of coding units. That is, a coding unit may be recursively partitioned based on at least one of the block shape information and the partition shape information, which is obtained from the sample of the predetermined location in each coding unit. An operation of recursively partitioning a coding unit has been described above in relation to FIG. 12, and thus detailed descriptions thereof will not be provided herein.

According to an embodiment, the image decoding device 200 may determine one or more coding units by partitioning the current coding unit, and determine an order of decoding the one or more coding units, based on a predetermined block (e.g., the current coding unit).

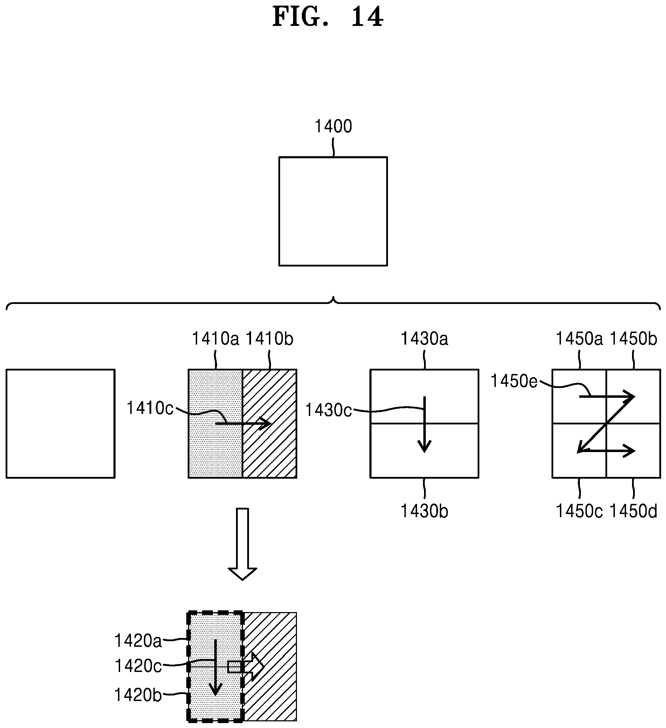

FIG. 14 illustrates a processing order of a plurality of coding units when the image decoding device 200 determines the plurality of coding units by partitioning a current coding unit, according to an embodiment.

According to an embodiment, the image decoding device 200 may determine second coding units 1410a and 1410b by partitioning a first coding unit 1400 in a vertical direction, determine second coding units 1430a and 1430b by partitioning the first coding unit 1400 in a horizontal direction, or determine second coding units 1450a to 1450d by partitioning the first coding unit 1400 in vertical and horizontal directions, based on block shape information and partition shape information.

Referring to FIG. 14, the image decoding device 200 may determine to process the second coding units 1410a and 1410b, which are determined by partitioning the first coding unit 1400 in a vertical direction, in a horizontal direction order 1410c. The image decoding device 200 may determine to process the second coding units 1430a and 1430b, which are determined by partitioning the first coding unit 1400 in a horizontal direction, in a vertical direction order 1430c. The image decoding device 200 may determine to process the second coding units 1450a to 1450d, which are determined by partitioning the first coding unit 1400 in vertical and horizontal directions, in a predetermined order for processing coding units in a row and then processing coding units in a next row (e.g., in a raster scan order or Z-scan order 1450e).

According to an embodiment, the image decoding device 200 may recursively partition coding units. Referring to FIG. 14, the image decoding device 200 may determine a plurality of coding units 1410a, 1410b, 1430a, 1430b, 1450a, 1450b, 1450c, and 1450d by partitioning the first coding unit 1400, and recursively partition each of the determined plurality of coding units 1410a, 1410b, 1430a, 1430b, 1450a, 1450b, 1450c, and 1450d. A partitioning method of the plurality of coding units 1410a, 1410b, 1430a, 1430b, 1450a, 1450b, 1450c, and 1450d may correspond to a partitioning method of the first coding unit 1400. As such, each of the plurality of coding units 1410a, 1410b, 1430a, 1430b, 1450a, 1450b, 1450c, and 1450d may be independently partitioned into a plurality of coding units. Referring to FIG. 14, the image decoding device 200 may determine the second coding units 1410a and 1410b by partitioning the first coding unit 1400 in a vertical direction, and determine to independently partition or not to partition each of the second coding units 1410a and 1410b.

According to an embodiment, the image decoding device 200 may determine third coding units 1420a and 1420b by partitioning the left second coding unit 1410a in a horizontal direction, and may not partition the right second coding unit 1410b.

According to an embodiment, a processing order of coding units may be determined based on an operation of partitioning a coding unit. In other words, a processing order of partitioned coding units may be determined based on a processing order of coding units immediately before being partitioned. The image decoding device 200 may determine a processing order of the third coding units 1420a and 1420b determined by partitioning the left second coding unit 1410a, independently of the right second coding unit 1410b. Because the third coding units 1420a and 1420b are determined by partitioning the left second coding unit 1410a in a horizontal direction, the third coding units 1420a and 1420b may be processed in a vertical direction order 1420c. Because the left and right second coding units 1410a and 1410b are processed in the horizontal direction order 1410c, the right second coding unit 1410b may be processed after the third coding units 1420a and 1420b included in the left second coding unit 1410a are processed in the vertical direction order 1420c. An operation of determining a processing order of coding units based on a coding unit before being partitioned is not limited to the above-described example, and various methods may be used to independently process coding units, which are partitioned and determined to various shapes, in a predetermined order.

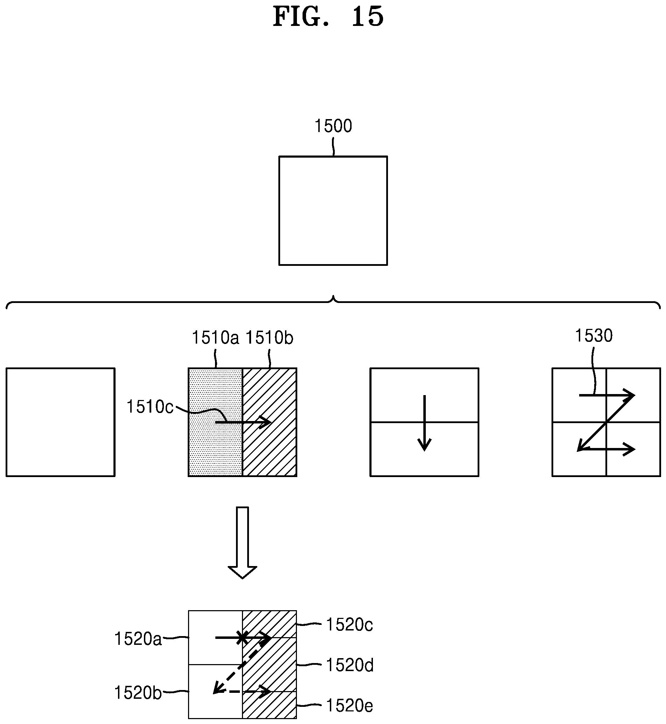

FIG. 15 illustrates an operation, performed by the image decoding device 200, of determining that a current coding unit is partitioned into an odd number of coding units, when the coding units are not processable in a predetermined order, according to an embodiment.

According to an embodiment, the image decoding device 200 may determine whether the current coding unit is partitioned into an odd number of coding units, based on obtained block shape information and partition shape information. Referring to FIG. 15, a square first coding unit 1500 may be partitioned into non-square second coding units 1510a and 1510b, and the second coding units 1510a and 1510b may be independently partitioned into third coding units 1520a and 1520b, and 1520c to 1520e. According to an embodiment, the image decoding device 200 may determine a plurality of third coding units 1520a and 1520b by partitioning the left second coding unit 1510a in a horizontal direction, and partition the right second coding unit 1510b into an odd number of third coding units 1520c to 1520e.

According to an embodiment, the image decoding device 200 may determine whether any coding unit is partitioned into an odd number of coding units, by deciding whether the third coding units 1520a and 1520b, and 1520c to 1520e are processable in a predetermined order. Referring to FIG. 15, the image decoding device 200 may determine the third coding units 1520a and 1520b, and 1520c to 1520e by recursively partitioning the first coding unit 1500. The image decoding device 200 may determine whether any of the first coding unit 1500, the second coding units 1510a and 1510b, and the third coding units 1520a and 1520b, and 1520c to 1520e is partitioned into an odd number of coding units, based on at least one of the block shape information and the partition shape information. For example, the right second coding unit 1510b may be partitioned into an odd number of third coding units 1520c to 1520e. A processing order of a plurality of coding units included in the first coding unit 1500 may be a predetermined order (e.g., a Z-scan order 1530), and the image decoding device 200 may decide whether the third coding units 1520c to 1520e, which are determined by partitioning the right second coding unit 1510b into an odd number of coding units, satisfy a condition for processing in the predetermined order.

According to an embodiment, the image decoding device 200 may determine whether the third coding units 1520a and 1520b, and 1520c to 1520e included in the first coding unit 1500 satisfy the condition for processing in the predetermined order, and the condition relates to whether at least one of a width and height of the second coding units 1510a and 1510b is divided in half along a boundary of the third coding units 1520a and 1520b, and 1520c to 1520e. For example, the third coding units 1520a and 1520b determined by dividing the height of the non-square left second coding unit 1510a in half satisfy the condition. However, because boundaries of the third coding units 1520c to 1520e determined by partitioning the right second coding unit 1510b into three coding units do not divide the width or height of the right second coding unit 1510b in half, it may be determined that the third coding units 1520c to 1520e do not satisfy the condition. When the condition is not satisfied as described above, the image decoding device 200 may decide disconnection of a scan order, and determine that the right second coding unit 1510b is partitioned into an odd number of coding units, based on the result of decision. According to an embodiment, when a coding unit is partitioned into an odd number of coding units, the image decoding device 200 may put a predetermined restriction on a coding unit of a predetermined location among the partitioned coding units. The restriction or the predetermined location has been described above in relation to various embodiments, and thus a detailed description thereof will not be provided herein.

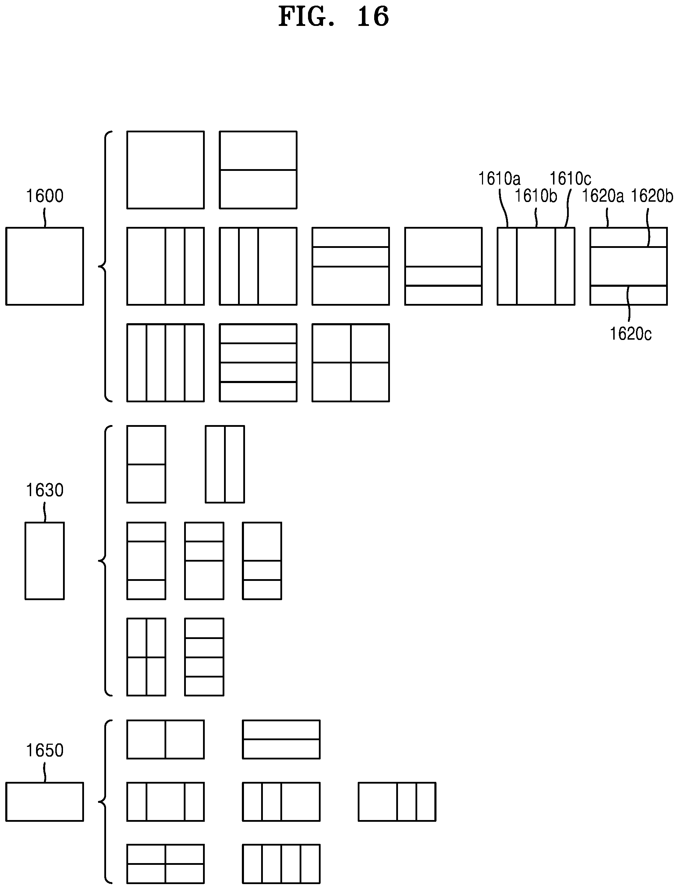

FIG. 16 illustrates an operation, performed by the image decoding device 200, of determining one or more coding units by partitioning a first coding unit 1600, according to an embodiment. According to an embodiment, the image decoding device 200 may partition the first coding unit 1600, based on at least one of block shape information and partition shape information, which is obtained by a receiver 210. The square first coding unit 1600 may be partitioned into four square coding units or into a plurality of non-square coding units. For example, referring to FIG. 16, when the block shape information indicates that the first coding unit 1600 has a square shape and the partition shape information indicates to partition the first coding unit 1600 into non-square coding units, the image decoding device 200 may partition the first coding unit 1600 into a plurality of non-square coding units. In detail, when the partition shape information indicates to determine an odd number of coding units by partitioning the first coding unit 1600 in a horizontal direction or a vertical direction, the image decoding device 200 may partition the square first coding unit 1600 into an odd number of coding units, e.g., second coding units 1610a, 1610b, and 1610c determined by partitioning the square first coding unit 1600 in a vertical direction or second coding units 1620a, 1620b, and 1620c determined by partitioning the square first coding unit 1600 in a horizontal direction.

According to an embodiment, the image decoding device 200 may determine whether the second coding units 1610a, 1610b, 1610c, 1620a, 1620b, and 1620c included in the first coding unit 1600 satisfy a condition for processing in a predetermined order, and the condition relates to whether at least one of a width and height of the first coding unit 1600 is divided in half along a boundary of the second coding units 1610a, 1610b, 1610c, 1620a, 1620b, and 1620c. Referring to FIG. 16, because boundaries of the second coding units 1610a, 1610b, and 1610c determined by partitioning the square first coding unit 1600 in a vertical direction do not divide the first coding unit 1600 in half, it may be determined that the first coding unit 1600 does not satisfy the condition for processing in the predetermined order. In addition, because boundaries of the second coding units 1620a, 1620b, and 1620c determined by partitioning the square first coding unit 1600 in a horizontal direction do not divide the first coding unit 1600 in half, it may be determined that the first coding unit 1600 does not satisfy the condition for processing in the predetermined order. When the condition is not satisfied as described above, the image decoding device 200 may decide disconnection of a scan order, and may determine that the first coding unit 1600 is partitioned into an odd number of coding units, based on the result of decision. According to an embodiment, when a coding unit is partitioned into an odd number of coding units, the image decoding device 200 may put a predetermined restriction on a coding unit at a predetermined location from among the partitioned coding units. The restriction or the predetermined location has been described above in relation to various embodiments, and thus detailed descriptions thereof will not be provided herein.

According to an embodiment, the image decoding device 200 may determine various-shaped coding units by partitioning a first coding unit.

Referring to FIG. 16, the image decoding device 200 may partition the square first coding unit 1600 or a non-square first coding unit 1630 or 1650 into various-shaped coding units.

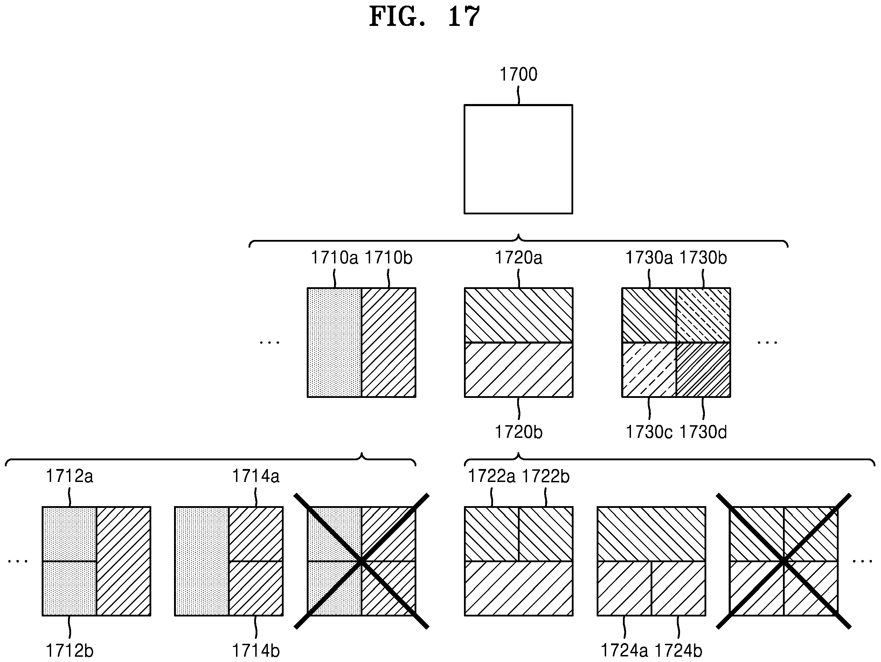

FIG. 17 illustrates that a shape into which a second coding unit is splittable by the image decoding device 200 is restricted when the second coding unit having a non-square shape, which is determined by partitioning a first coding unit 1700, satisfies a predetermined condition, according to an embodiment.

According to an embodiment, the image decoding device 200 may determine to partition the square first coding unit 1700 into non-square second coding units 1710a, 1710b, 1720a, and 1720b, based on at least one of block shape information and partition shape information, which is obtained by the receiver 210. The second coding units 1710a, 1710b, 1720a, and 1720b may be independently partitioned. As such, the image decoding device 200 may determine to or not to partition the first coding unit 1700 into a plurality of coding units, based on at least one of the block shape information and the partition shape information of each of the second coding units 1710a, 1710b, 1720a, and 1720b. According to an embodiment, the image decoding device 200 may determine third coding units 1712a and 1712b by partitioning the non-square left second coding unit 1710a, which is determined by partitioning the first coding unit 1700 in a vertical direction, in a horizontal direction. However, when the left second coding unit 1710a is partitioned in a horizontal direction, the image decoding device 200 may restrict the right second coding unit 1710b not to be partitioned in a horizontal direction in which the left second coding unit 1710a is partitioned. When third coding units 1714a and 1714b are determined by also partitioning the right second coding unit 1710b in a horizontal direction, because the left and right second coding units 1710a and 1710b are independently partitioned in a horizontal direction, the third coding units 1712a, 1712b, 1714a, and 1714b may be determined. However, this case serves equally as a case in which the image decoding device 200 partitions the first coding unit 1700 into four square second coding units 1730a, 1730b, 1730c, and 1730d, based on at least one of the block shape information and the partition shape information, and may be inefficient in terms of image decoding.

According to an embodiment, the image decoding device 200 may determine third coding units 1722a, 1722b, 1724a, and 1724b by partitioning the non-square second coding unit 1720a or 1720b, which is determined by partitioning the first coding unit 1700 in a horizontal direction, in a vertical direction. However, when a second coding unit (e.g., the upper second coding unit 1720a) is partitioned in a vertical direction, due to the above-described reason, the image decoding device 200 may restrict the other second coding unit (e.g., the lower second coding unit 1720b) not to be partitioned in a vertical direction in which the upper second coding unit 1720a is partitioned.

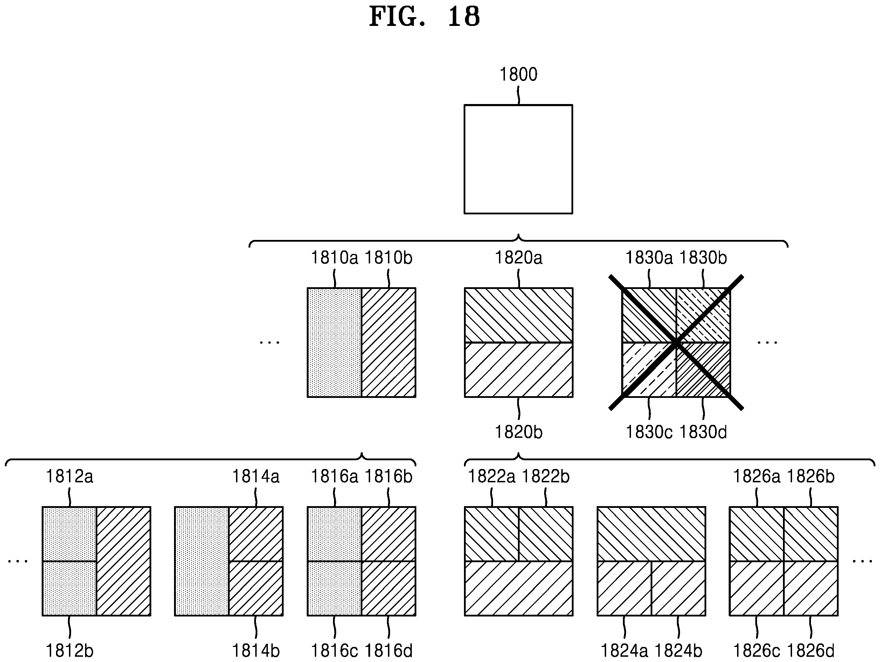

FIG. 18 illustrates an operation, performed by the image decoding device 200, of partitioning a square coding unit when partition shape information indicates that the square coding unit is not to be partitioned into four square coding units, according to an embodiment.

According to an embodiment, the image decoding device 200 may determine second coding units 1810a, 1810b, 1820a, 1820b, etc. by partitioning a first coding unit 1800, based on at least one of block shape information and partition shape information. The partition shape information may include information about various methods of partitioning a coding unit but, the information about various partitioning methods may not include information for partitioning a coding unit into four square coding units. According to this partition shape information, the image decoding device 200 may not partition the first square coding unit 1800 into four square second coding units 1830a, 1830b, 1830c, and 1830d. The image decoding device 200 may determine the non-square second coding units 1810a, 1810b, 1820a, 1820b, etc., based on the partition shape information.

According to an embodiment, the image decoding device 200 may independently partition the non-square second coding units 1810a, 1810b, 1820a, 1820b, etc. Each of the second coding units 1810a, 1810b, 1820a, 1820b, etc. may be recursively partitioned in a predetermined order, and this may correspond to a partitioning method of the first coding unit 1800, based on at least one of the block shape information and the partition shape information.

For example, the image decoding device 200 may determine square third coding units 1812a and 1812b by partitioning the left second coding unit 1810a in a horizontal direction, and determine square third coding units 1814a and 1814b by partitioning the right second coding unit 1810b in a horizontal direction. Furthermore, the image decoding device 200 may determine square third coding units 1816a to 1816d by partitioning both of the left and right second coding units 1810a and 1810b in a horizontal direction. In this case, coding units having the same shape as the four square second coding units 1830a, 1830b, 1830c, and 1830d partitioned from the first coding unit 1800 may be determined.

As another example, the image decoding device 200 may determine square third coding units 1822a and 1822b by partitioning the upper second coding unit 1820a in a vertical direction, and may determine square third coding units 1824a and 1824b by partitioning the lower second coding unit 1820b in a vertical direction. Furthermore, the image decoding device 200 may determine square third coding units 1826a, 1826b, 1826c, and 1826d by partitioning both of the upper and lower second coding units 1820a and 1820b in a vertical direction. In this case, coding units having the same shape as the four square second coding units 1830a, 1830b, 1830c, and 1830d partitioned from the first coding unit 1800 may be determined.

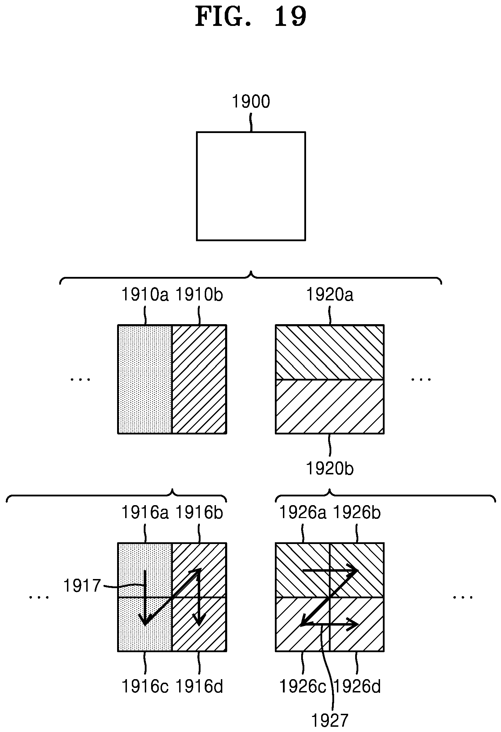

FIG. 19 illustrates that a processing order of a plurality of coding units is variable depending on an operation of partitioning a coding unit, according to an embodiment.

According to an embodiment, the image decoding device 200 may partition a first coding unit 1900, based on block shape information and partition shape information. When the block shape information indicates a square shape and the partition shape information indicates to partition the first coding unit 1900 in at least one of horizontal and vertical directions, the image decoding device 200 may determine second coding units 1910a, 1910b, 1920a, and 1920b by partitioning the first coding unit 1900. Referring to FIG. 19, the non-square second coding units 1910a, 1910b, 1920a, and 1920b determined by partitioning the first coding unit 1900 in only a horizontal direction or vertical direction may be independently partitioned based on the block shape information and the partition shape information of each coding unit. For example, the image decoding device 200 may determine third coding units 1916a, 1916b, 1916c, and 1916d by partitioning the second coding units 1910a and 1910b, which are generated by partitioning the first coding unit 1900 in a vertical direction, in a horizontal direction, and determine third coding units 1926a, 1926b, 1926c, and 1926d by partitioning the second coding units 1920a and 1920b, which are generated by partitioning the first coding unit 1900 in a horizontal direction, in a vertical direction. An operation of partitioning the second coding units 1910a, 1910b, 1920a, and 1920b has been described above in relation to FIG. 17, and thus detailed descriptions thereof will not be provided herein.

According to an embodiment, the image decoding device 200 may process coding units in a predetermined order. An operation of processing coding units in a predetermined order has been described above in relation to FIG. 14, and thus detailed descriptions thereof will not be provided herein. Referring to FIG. 19, the image decoding device 200 may determine the four square third coding units 1916a, 1916b, 1916c, 1916d, 1926a, 1926b, 1926c, and 1926d by partitioning the square first coding unit 1900. According to an embodiment, the image decoding device 200 may determine a processing order of the third coding units 1916a, 1916b, 1916c, 1916d, 1926a, 1926b, 1926c, and 1926d based on a partitioning method of the first coding unit 1900.

According to an embodiment, the image decoding device 200 may determine the third coding units 1916a, 1916b, 1916c, and 1916d by partitioning the second coding units 1910a and 1910b generated by partitioning the first coding unit 1900 in a vertical direction, in a horizontal direction, and may process the third coding units 1916a, 1916b, 1916c, and 1916d in a processing order 1917 for initially processing the third coding units 1916a and 1916c, which are included in the left second coding unit 1910a, in a vertical direction and then processing the third coding unit 1916b and 1916d, which are included in the right second coding unit 1910b, in a vertical direction.

According to an embodiment, the image decoding device 200 may determine the third coding units 1926a, 1926b, 1926c, and 1926d by partitioning the second coding units 1920a and 1920b generated by partitioning the first coding unit 1900 in a horizontal direction, in a vertical direction, and process the third coding units 1926a, 1926b, 1926c, and 1926d in a processing order 1927 for initially processing the third coding units 1926a and 1926b, which are included in the upper second coding unit 1920a, in a horizontal direction and then processing the third coding unit 1926c and 1926d, which are included in the lower second coding unit 1920b, in a horizontal direction.

Referring to FIG. 19, the square third coding units 1916a, 1916b, 1916c, 1916d, 1926a, 1926b, 1926c, and 1926d may be determined by partitioning the second coding units 1910a, 1910b, 1920a, and 1920b. Although the second coding units 1910a and 1910b are determined by partitioning the first coding unit 1900 in a vertical direction differently from the second coding units 1920a and 1920b which are determined by partitioning the first coding unit 1900 in a horizontal direction, the third coding units 1916a, 1916b, 1916c, 1916d, 1926a, 1926b, 1926c, and 1926d partitioned therefrom eventually show same-shaped coding units partitioned from the first coding unit 1900. As such, by recursively partitioning a coding unit in different manners based on at least one of the block shape information and the partition shape information, the image decoding device 200 may process a plurality of coding units in different orders even when the coding units are eventually determined to the same shape.

FIG. 20 illustrates an operation of determining a depth of a coding unit as the shape and size of the coding unit vary when a plurality of coding units are determined by recursively partitioning the coding unit, according to an embodiment.

According to an embodiment, the image decoding device 200 may determine the depth of the coding unit based on a predetermined criterion. For example, the predetermined criterion may be the length of a long side of the coding unit. When the length of a long side of a coding unit before being partitioned is 2n times (n>0) the length of a long side of a partitioned current coding unit, the image decoding device 200 may determine that a depth of the current coding unit is increased from a depth of the coding unit before being partitioned, by n. In the following description, a coding unit having an increased depth is expressed as a coding unit of a deeper depth.

Referring to FIG. 20, according to an embodiment, the image decoding device 200 may determine a second coding unit 2002 and a third coding unit 2004 of deeper depths by partitioning a square first coding unit 2000 based on block shape information indicating a square shape (for example, the block shape information may be expressed as '0: SQUARE'). Assuming that the size of the square first coding unit 2000 is 2Nx2N, the second coding unit 2002 determined by dividing a width and height of the first coding unit 2000 to 1/2¹ may have a size of NxN. Furthermore, the third coding unit 2004 determined by reducing a width and height of the second coding unit 2002 to 1/2 may have a size of N/2xN/2. In this case, a width and height of the third coding unit 2004 are 1/2² times those of the first coding unit 2000. When a depth of the first coding unit 2000 is D, a depth of the second coding unit 2002, the width and height of which are 1/2¹ times those of the first coding unit 2000, may be D+1, and a depth of the third coding unit 2004, the width and height of which are 1/2² times those of the first coding unit 2000, may be D+2.

According to an embodiment, the image decoding device 200 may determine a second coding unit 2012 or 2022 and a third coding unit 2014 or 2024 of deeper depths by partitioning a non-square first coding unit 2010 or 2020 based on block shape information indicating a non-square shape (for example, the block shape information may be expressed as '1: NS_VER' indicating a non-square shape, a height of which is longer than a width, or as '2: NS_HOR' indicating a non-square shape, a width of which is longer than a height).

The image decoding device 200 may determine a second coding unit 2002, 2012, or 2022 by dividing at least one of a width and height of the first coding unit 2010 having a size of N×2N. That is, the image decoding device 200 may determine the second coding unit 2002 having a size of N×N or the second coding unit 2022 having a size of N×N/2 by partitioning the first coding unit 2010 in a horizontal direction, or determine the second coding unit 2012 having a size of N/2×N by partitioning the first coding unit 2010 in horizontal and vertical directions.

According to an embodiment, the image decoding device 200 may determine the second coding unit 2002, 2012, or 2022 by dividing at least one of a width and height of the first coding unit 2020 having a size of 2N×N. That is, the image decoding device 200 may determine the second coding unit 2002 having a size of N×N or the second coding unit 2012 having a size of N/2×N by partitioning the first coding unit 2020 in a vertical direction, or determine the second coding unit 2022 having a size of N×N/2 by partitioning the first coding unit 2020 in horizontal and vertical directions.

According to an embodiment, the image decoding device 200 may determine a third coding unit 2004, 2014, or 2024 by dividing at least one of a width and height of the second coding unit 2002 having a size of N×N. That is, the image decoding device 200 may determine the third coding unit 2004 having a size of N/2×N/2, the third coding unit 2014 having a size of N/2²×N/2, or the third coding unit 2024 having a size of N/2×N/2² by partitioning the second coding unit 2002 in vertical and horizontal directions.

According to an embodiment, the image decoding device 200 may determine the third coding unit 2004, 2014, or 2024 by dividing at least one of a width and height of the second coding unit 2012 having a size of N/2×N. That is, the image decoding device 200 may determine the third coding unit 2004 having a size of N/2×N/2 or the third coding unit 2024 having a size of N/2×N/2² by partitioning the second coding unit 2012 in a horizontal direction, or determine the third coding unit 2014 having a size of N/2²×N/2 by partitioning the second coding unit 2012 in vertical and horizontal directions.

According to an embodiment, the image decoding device 200 may determine the third coding unit 2004, 2014, or 2024 by dividing at least one of a width and height of the second coding unit 2022 having a size of N×N/2. That is, the image decoding device 200 may determine the third coding unit 2004 having a size of N/2×N/2 or the third coding unit 2014 having a size of N/2²×N/2 by partitioning the second coding unit 2022 in a vertical direction, or determine the third coding unit 2024 having a size of N/2×N/2² by partitioning the second coding unit 2022 in vertical and horizontal directions.

According to an embodiment, the image decoding device 200 may partition the square coding unit 2000, 2002, or 2004 in a horizontal or vertical direction. For example, the image decoding device 200 may determine the first coding unit 2010 having a size of N×2N by partitioning the first coding unit 2000 having a size of 2N×2N in a vertical direction, or determine the first coding unit 2020 having a size of 2N×N by partitioning the first coding unit 2000 in a horizontal direction. According to an embodiment, when a depth is determined based on the length of the longest side of a coding unit, a depth of a coding unit determined by partitioning the first coding unit 2000 having a size of 2N×2N in a horizontal or vertical direction may be the same as the depth of the first coding unit 2000.

According to an embodiment, a width and height of the third coding unit 2014 or 2024 may be 1/2² times those of the first coding unit 2010 or 2020. When a depth of the first coding unit 2010 or 2020 is D, a depth of the second coding unit 2012 or 2022, the width and height of which are 1/2 times those of the first coding unit 2010 or 2020, may be D+1, and a depth of the third coding unit 2014 or 2024, the width and height of which are 1/2² times those of the first coding unit 2010 or 2020, may be D+2.

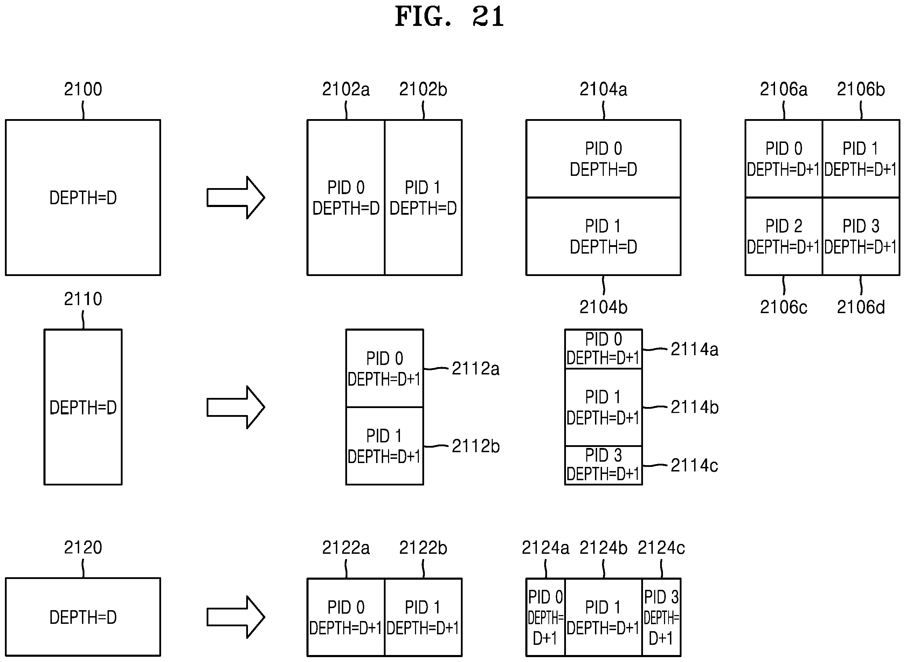

FIG. 21 illustrates depths determinable based on the shapes and sizes of coding units, and part indices (PIDs) for distinguishing the coding units, according to an embodiment.

According to an embodiment, the image decoding device 200 may determine various-shaped second coding units by partitioning a square first coding unit 2100. Referring to FIG. 21, the image decoding device 200 may determine second coding units 2102a, 2102b, 2104a, 2104b, 2106a, 2106b, 2106c, and 2106d by partitioning the first coding unit 2100 in at least one of vertical and horizontal directions based on partition shape information. That is, the image decoding device 200 may determine the second coding units 2102a, 2102b, 2104a, 2104b, 2106a, 2106b, 2106c, and 2106d based on the partition shape information of the first coding unit 2100.

According to an embodiment, a depth of the second coding units 2102a, 2102b, 2104a, 2104b, 2106a, 2106b, 2106c, and 2106d, which are determined based on the partition shape information of the square first coding unit 2100, may be determined based on the length of a long side thereof. For example, because the length of a side of the square first coding unit 2100 equals the length of a long side of the non-square second coding units 2102a, 2102b, 2104a, and 2104b, the first coding unit 2100 and the non-square second coding units 2102a, 2102b, 2104a, and 2104b may have the same depth, e.g., D. However, when the image decoding device 200 partitions the first coding unit 2100 into the four square second coding units 2106a, 2106b, 2106c, and 2106d based on the partition shape information, because the length of a side of the square second coding units 2106a, 2106b, 2106c, and 2106d is 1/2 times the length of a side of the first coding unit 2100, a depth of the second coding units 2106a, 2106b, 2106c, and 2106d may be D+1 which is deeper than the depth D of the first coding unit 2100 by 1.

According to an embodiment, the image decoding device 200 may determine a plurality of second coding units 2112a, 2112b, 2114a, 2114b, and 2114c by partitioning a first coding unit 2110, a height of which is longer than a width, in a horizontal direction based on the partition shape information. According to an embodiment, the image decoding device 200 may determine a plurality of second coding units 2122a, 2122b, 2124a, 2124b, and 2124c by partitioning a first coding unit 2120, a width of which is longer than a height, in a vertical direction based on the partition shape information.

According to an embodiment, a depth of the second coding units 2112a, 2112b, 2114a, 2114b, 2114c, 2122a, 2122b, 2124a, 2124b, and 2124c, which are determined based on the partition shape information of the non-square first coding unit 2110 or 2120, may be determined based on the length of a long side thereof. For example, because the length of a side of the square second coding units 2112a and 2112b is 1/2 times the length of a long side of the first coding unit 2110 having a non-square shape, a height of which is longer than a width, a depth of the square second coding units 2112a and 2112b is D+1 which is deeper than the depth D of the non-square first coding unit 2110 by 1.

Furthermore, the image decoding device 200 may partition the non-square first coding unit 2110 into an odd number of second coding units 2114a, 2114b, and 2114c based on the partition shape information. The odd number of second coding units 2114a, 2114b, and 2114c may include the non-square second coding units 2114a and 2114c and the square second coding unit 2114b. In this case, because the length of a long side of the non-square second coding units 2114a and 2114c and the length of a side of the square second coding unit 2114b are 1/2 times the length of a long side of the first coding unit 2110, a depth of the second coding units 2114a, 2114b, and 2114c may be D+1 which is deeper than the depth D of the non-square first coding unit 2110 by 1. The image decoding device 200 may determine depths of coding units partitioned from the first coding unit 2120 having a non-square shape, a width of which is longer than a height, by using the above-described method of determining depths of coding units partitioned from the first coding unit 2110.

According to an embodiment, the image decoding device 200 may determine PIDs for identifying partitioned coding units, based on a size ratio between the coding units when an odd number of partitioned coding units do not have equal sizes. Referring to FIG. 21, a coding unit 2114b of a center location among an odd number of partitioned coding units 2114a, 2114b, and 2114c may have a width equal to that of the other coding units 2114a and 2114c and a height which is two times that of the other coding units 2114a and 2114c. That is, in this case, the coding unit 2114b at the center location may include two of the other coding unit 2114a or 2114c. Therefore, assuming that a PID of the coding unit 2114b at the center location is 1 based on a scan order, a PID of the coding unit 2114c located next to the coding unit 2114b may be increased by 2 and thus may be 3. That is, discontinuity in PID values may be present. According to an embodiment, the image decoding device 200 may determine whether an odd number of partitioned coding units do not have equal sizes, based on whether discontinuity is present in PIDs for identifying the partitioned coding units.

According to an embodiment, the image decoding device 200 may determine whether to use a specific partitioning method, based on PID values for identifying a plurality of coding units determined by partitioning a current coding unit. Referring to FIG. 21, the image decoding device 200 may determine an even number of coding units 2112a and 2112b or an odd number of coding units 2114a, 2114b, and 2114c by partitioning the first coding unit 2110 having a rectangular shape, a height of which is longer than a width. The image decoding device 200 may use PIDs to identify a plurality of coding units. According to an embodiment, the PID may be obtained from a sample of a predetermined location of each coding unit (e.g., a top left sample).

According to an embodiment, the image decoding device 200 may determine a coding unit at a predetermined location from among the partitioned coding units, by using the PIDs for distinguishing the coding units. According to an embodiment, when the partition shape information of the first coding unit 2110 having a rectangular shape, a height of which is longer than a width, indicates to partition a coding unit into three coding units, the image decoding device 200 may partition the first coding unit 2110 into three coding units 2114a, 2114b, and 2114c. The image decoding device 200 may assign a PID to each of the three coding units 2114a, 2114b, and 2114c. The image decoding device 200 may compare PIDs of an odd number of partitioned coding units to determine a coding unit at a center location from among the coding units. The image decoding device 200 may determine the coding unit 2114b having a PID corresponding to a middle value among the PIDs of the coding units, as the coding unit at the center location from among the coding units determined by partitioning the first coding unit 2110. According to an embodiment, the image decoding device 200 may determine PIDs for distinguishing partitioned coding units, based on a size ratio between the coding units when the partitioned coding units do not have equal sizes. Referring to FIG. 21, the coding unit 2114b generated by partitioning the first coding unit 2110 may have a width equal to that of the other coding units 2114a and 2114c and a height which is two times that of the other coding units 2114a and 2114c. In this case, assuming that the PID of the coding unit 2114b at the center location is 1, the PID of the coding unit 2114c located next to the coding unit 2114b may be increased by 2 and thus may be 3. When the PID is not uniformly increased as described above, the image decoding device 200 may determine that a coding unit is partitioned into a plurality of coding units including a coding unit having a size different from that of the other coding units. According to an embodiment, when the partition shape information indicates to partition a coding unit into an odd number of coding units, the image decoding device 200 may partition a current coding unit in such a manner that a coding unit of a predetermined location among an odd number of coding units (e.g., a coding unit of a centre location) has a size different from that of the other coding units. In this case, the image decoding device 200, may determine the coding unit of the centre location, which has a different size, by using PIDs of the coding units. However, the PIDs and the size or location of the coding unit of the predetermined location are not limited to the above-described examples, and various PIDs and various locations and sizes of coding units may be used.

According to an embodiment, the image decoding device 200 may use a predetermined data unit where a coding unit starts to be recursively partitioned.

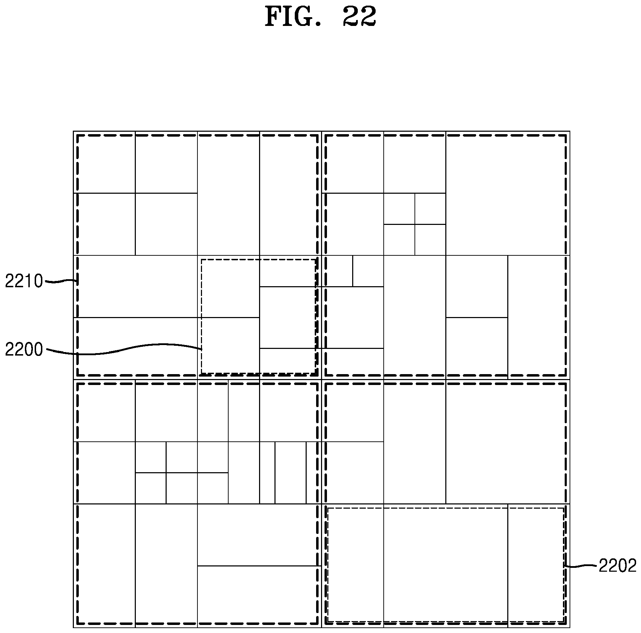

FIG. 22 illustrates that a plurality of coding units are determined based on a plurality of predetermined data units included in a picture, according to an embodiment.

According to an embodiment, a predetermined data unit may be defined as a data unit where a coding unit starts to be recursively partitioned by using at least one of block shape information and partition shape information. That is, the predetermined data unit may correspond to a coding unit of an uppermost depth, which is used to determine a plurality of coding units partitioned from a current picture. In the following description, for convenience of explanation, the predetermined data unit is referred to as a reference data unit.

According to an embodiment, the reference data unit may have a predetermined size and shape. According to an embodiment, the reference data unit may include M×N samples. Herein, M and N may be equal values, and may be integers expressed as multipliers of 2. That is, the reference data unit may have a square or non-square shape, and may be an integer number of coding units.

According to an embodiment, the image decoding device 200 may partition the current picture into a plurality of reference data units. According to an embodiment, the image decoding device 200 may partition the plurality of reference data units, which are partitioned from the current picture, by using partitioning information about each reference data unit. The operation of partitioning the reference data unit may correspond to a partitioning operation using a quadtree structure.

According to an embodiment, the image decoding device 200 may previously determine the minimum size allowed for the reference data units included in the current picture. As such, the image decoding device 200 may determine various reference data units having sizes equal to or greater than the minimum size, and determine one or more coding units by using the block shape information and the partition shape information with reference to the determined reference data unit.

Referring to FIG. 22, the image decoding device 200 may use a square reference coding unit 2200 or a non-square reference coding unit 2202. According to an embodiment, the shape and size of reference coding units may be determined based on various data units capable of including one or more reference coding units (e.g., sequences, pictures, slices, slice segments, and largest coding units).

According to an embodiment, the receiver 210 of the image decoding device 200 may obtain, from a bitstream, at least one of reference coding unit shape information and reference coding unit size information with respect to each of the various data units. An operation of partitioning the square reference coding unit 2200 into one or more coding units has been described above in relation to the operation of partitioning the current coding unit 1000 of FIG. 10, and an operation of partitioning the non-square reference coding unit 2202 into one or more coding units has been described above in relation to the operation of partitioning the current coding unit 1100 or 1150 of FIG. 11. Thus, detailed descriptions thereof will not be provided herein.

According to an embodiment, the image decoding device 200 may use a PID for identifying the size and shape of reference coding units, to determine the size and shape of reference coding units according to some data units previously determined based on a predetermined condition. That is, the receiver 210 may obtain, from the bitstream, only the PID for identifying the size and shape of reference coding units with respect to each slice, slice segment, or largest coding unit which is a data unit satisfying a predetermined condition (e.g., a data unit having a size equal to or smaller than a slice) among the various data units (e.g., sequences, pictures, slices, slice segments, and largest coding units). The image decoding device 200 may determine the size and shape of reference data units with respect to each data unit, which satisfies the predetermined condition, by using the PID. When the reference coding unit shape information and the reference coding unit size information are obtained and used from the bitstream according to each data unit having a relatively small size, because efficiency of using the bitstream may not be good, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the image decoding device 200 may determine at least one of the size and shape of reference coding units included in a data unit serving as a unit for obtaining the PID, by selecting the previously determined at least one of the size and shape of reference coding units based on the PID.

According to an embodiment, the image decoding device 200 may use one or more reference coding units included in a largest coding unit. That is, a largest coding unit partitioned from a picture may include one or more reference coding units, and coding units may be determined by recursively partitioning each reference coding unit. According to an embodiment, at least one of a width and height of the largest coding unit may be integer times at least one of the width and height of the reference coding units. According to an embodiment, the size of reference coding units may be obtained by partitioning the largest coding unit n times based on a quadtree structure. That is, the image decoding device 200 may determine the reference coding units by partitioning the largest coding unit n times based on a quadtree structure, and partition the reference coding unit based on at least one of the block shape information and the partition shape information according to various embodiments.

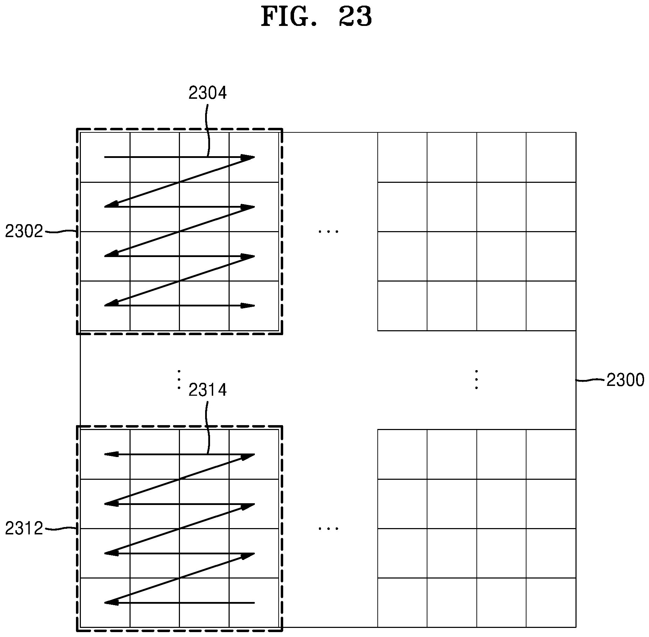

FIG. 23 illustrates a processing block serving as a unit for determining a determination order of reference coding units included in a picture 2300, according to an embodiment.

According to an embodiment, the image decoding device 200 may determine one or more processing blocks partitioned from a picture. The processing block is a data unit including one or more reference coding units partitioned from a picture, and the one or more reference coding units included in the processing block may be determined in a specific order. That is, a determination order of one or more reference coding units determined in each processing block may correspond to one of various types of orders for determining reference coding units, and may vary depending on the processing block. The determination order of reference coding units, which is determined with respect to each processing block, may be one of various orders, e.g., raster scan order, Z-scan, N-scan, up-right diagonal scan, horizontal scan, and vertical scan, but is not limited to the above-mentioned scan orders.

According to an embodiment, the image decoding device 200 may obtain processing block size information and determine the size of one or more processing blocks included in the picture. The image decoding device 200 may obtain the processing block size information from a bitstream and determine the size of one or more processing blocks included in the picture. The size of processing blocks may be a predetermined size of data units, which is indicated by the processing block size information.

According to an embodiment, the receiver 210 of the image decoding device 200 may obtain the processing block size information from the bitstream according to each specific data unit. For example, the processing block size information may be obtained from the bitstream in a data unit such as image, sequence, picture, slice, or slice segment. That is, the receiver 210 may obtain the processing block size information from the bitstream according to each of the various data units, and the image decoding device 200 may determine the size of one or more processing blocks, which are partitioned from the picture, by using the obtained processing block size information. The size of processing blocks may be integer times that of the reference coding units.

According to an embodiment, the image decoding device 200 may determine the size of processing blocks 2302 and 2312 included in the picture 2300. For example, the image decoding device 200 may determine the size of processing blocks based on the processing block size information obtained from the bitstream. Referring to FIG. 23, according to an embodiment, the image decoding device 200 may determine a width of the processing blocks 2302 and 2312 to be four times the width of the reference coding units, and may determine a height of the processing blocks 2302 and 2312 to be four times the height of the reference coding units. The image decoding device 200 may determine a determination order of one or more reference coding units in one or more processing blocks.

According to an embodiment, the image decoding device 200 may determine the processing blocks 2302 and 2312, which are included in the picture 2300, based on the size of processing blocks, and determine a determination order of one or more reference coding units in the processing blocks 2302 and 2312. According to an embodiment, determination of reference coding units may include determination of the size of reference coding units.

According to an embodiment, the image decoding device 200 may obtain, from the bitstream, determination order information of one or more reference coding units included in one or more processing blocks, and determine a determination order to one or more reference coding units based on the obtained determination order information. The determination order information may be defined as an order or direction for determining the reference coding units in the processing block. That is, the determination order of reference coding units may be independently determined with respect to each processing block.

According to an embodiment, the image decoding device 200 may obtain the determination order information of reference coding units from the bitstream according to each specific data unit. For example, the receiver 210 may obtain the determination order information of reference coding units from the bitstream according to each data unit such as image, sequence, picture, slice, slice segment, or processing block. Because the determination order information of reference coding units indicates an order for determining reference coding units in a processing block, the determination order information may be obtained with respect to each specific data unit including an integer number of processing blocks.

According to an embodiment, the image decoding device 200 may determine one or more reference coding units based on the determined determination order.

According to an embodiment, the receiver 210 may obtain the determination order information of reference coding units from the bitstream as information related to the processing blocks 2302 and 2312, and the image decoding device 200 may determine a determination order of one or more reference coding units included in the processing blocks 2302 and 2312 and determine one or more reference coding units, which are included in the picture 2300, based on the determination order. Referring to FIG. 23, the image decoding device 200 may determine determination orders 2304 and 2314 of one or more reference coding units in the processing blocks 2302 and 2312, respectively. For example, when the determination order information of reference coding units is obtained with respect to each processing block, different types of the determination order information of reference coding units may be obtained for the processing blocks 2302 and 2312. When the determination order 2304 of reference coding units in the processing block 2302 is a raster scan order, reference coding units included the processing block 2302 may be determined in a raster scan order. Unlike this, when the determination order 2314 of reference coding units in the other processing block 2312 is an inverse raster scan order, reference coding units included in the processing block 2312 may be determined in an inverse raster scan order.

According to an embodiment, the image decoding device 200 may decode the determined one or more reference coding units. The image decoding device 200 may decode the picture based on the reference coding units determined as described above. A method of decoding the reference coding units may include various image decoding methods.

According to an embodiment, the image decoding device 200 may obtain block shape information indicating the shape of a current coding unit or partition shape information indicating a partitioning method of the current coding unit, from the bitstream, and use the obtained information. The block shape information or the partition shape information may be included in the bitstream related to various data units. For example, the image decoding device 200 may use the block shape information or the partition shape information included in a sequence parameter set, a picture parameter set, a video parameter set, a slice header, or a slice segment header. Furthermore, the image decoding device 200 may obtain syntax corresponding to the block shape information or the partition shape information from the bitstream according to each largest coding unit, reference coding unit, or processing block, and use the obtained syntax.

While the present disclosure has been particularly shown and described with reference to embodiments thereof, it will be understood by one of ordinary skill in the art that various changes in form and details may be made therein without departing from the scope of the disclosure as defined by the following claims. The embodiments should be considered in a descriptive sense only and not for purposes of limitation. Therefore, the scope of the disclosure is defined not by the detailed description of the disclosure but by the following claims, and all differences within the scope will be construed as being included in the present disclosure.

Meanwhile, the afore-described embodiments of the present disclosure can be written as computer programs and can be implemented in general-use digital computers that execute the programs by using a computer-readable recording medium. Examples of the computer-readable recording medium include magnetic storage media (e.g., ROM, floppy disks, hard disks, etc.), optical recording media (e.g., CD-ROMs, or DVDs), etc.

## Claims

1. An image decoding method comprising:
obtaining, from a bitstream, partitioning information for a luma block;
partitioning a current luma block in at least one direction, thus partitioning the current luma block into at least two luma blocks, when the partitioning information indicates that the current luma block is to be partitioned to a next level, and obtaining, from the bitstream, merge information about a current chroma block corresponding to the current luma block;
performing decoding on the current luma block when the partitioning information indicates that the current luma block is not to be partitioned;
partitioning the current chroma block into at least two chroma blocks corresponding to the at least two luma blocks when the partitioning information indicates that the current luma block is to be partitioned to the next level; and
performing decoding on the current chroma block when the partitioning information indicates that the current luma block is not to be partitioned or the merge information indicates that the partitioning of the current chroma block is to be discontinued.

2. The image decoding method of claim 1, wherein, when the partitioning information indicates that the current luma block is not to be partitioned, the merge information is not obtained.

3. The image decoding method of claim 1, wherein a number of luma blocks partitioned from the current luma block is equal to or greater than a number of chroma blocks partitioned from the current chroma block.

4. The image decoding method of claim 1, wherein the partitioning of the current chroma block into the at least two chroma blocks comprises determining whether to partition the current chroma block into the at least two chroma blocks, based on at least one of a size and a gradient of a largest coding unit comprising the current chroma block.

5. The image decoding method of claim 1, wherein, when the next level is greater than a predetermined level, the current chroma block is partitioned according to a same partition shape as the current luma block.

6. The image decoding method of claim 1, wherein, when the next level is less than a predetermined level, the current chroma block is partitioned according to a same partition shape as the current luma block.

7. The image decoding method of claim 1, wherein, when a size of the current chroma block is greater than a predetermined size, the current chroma block is partitioned according to a same partition shape as the current luma block.

8. The image decoding method of claim 1, wherein, when a size of the current chroma block is less than a predetermined size, the current chroma block is partitioned according to a same partition shape as the current luma block.

9. The image decoding method of claim 1, wherein, when a shape of the current chroma bock is at least one of a square shape or a non-square shape, the current chroma block is partitioned according to a partition shape equal to a partition shape of the current luma block.

10. The image decoding method of claim 1, wherein the current luma block is a current luma coding unit, and the current chroma block is a current chroma coding unit.

11. An image encoding method comprising:
determining whether to partition a current luma block in at least one direction, thus partitioning the current luma block into at least two luma blocks at a next level;
performing encoding on the current luma block when the current luma block is not to be partitioned;
determining whether to partition a current chroma block corresponding to the current luma block into at least two chroma blocks corresponding to the at least two luma blocks when the current luma block is to be partitioned;
performing encoding on the current chroma block when the current luma block is not to be partitioned or the current chroma block is not to be partitioned; and
encoding and transmitting partitioning information indicating whether the current luma block is to be partitioned and merge information indicating whether the current chroma block is to be partitioned.

12. An image decoding device comprising:
a receiver configured to obtain, from a bitstream, partitioning information for a luma block and merge information about a current chroma block corresponding to a current luma block;
a block determiner configured to partition a current luma block in at least one direction, thus partitioning the current luma block into at least two luma blocks, when the partitioning information indicates that the current luma block is to be partitioned to a next level, and partition the current chroma block into at least two chroma blocks corresponding to the at least two luma blocks; and
a decoder configured to perform decoding on the current luma block when the partitioning information indicates that the current luma block is not to be partitioned, and perform decoding on the current chroma block when the partitioning information indicates that the current luma block is not to be partitioned or the merge information indicates that the partitioning of the current chroma block is to be discontinued.
